# EUROPEAN PATENT APPLICATION

(11) **EP 4 019 930 A1**
(43) Date of publication of application: **29.06.2022**
(21) Application number: 20854335.5
(22) Date of filing: 18.06.2020
(51) Int. Cl.: G01N 1/34, G01N 30/06

(54) **PURIFICATION METHOD FOR OILS**

(30) Priority: 22.08.2019 JP 2019152402
(71) Applicant: MIURA CO., LTD., Matsuyama-shi Ehime 799-2696 (JP)
(72) Inventor: FUJITA, Hiroyuki, Matsuyama-shi Ehime 799-2696 (JP)
(74) Representative: Elkington and Fife LLP
(86) International application number: PCT/JP2020/024026
(87) International publication number: WO 2021/033404

(57) **Abstract**

Oils containing an organic halogenated substance are added to a sulfuric silica gel layer (130), and an impurity substance in the oils is decomposed in the sulfuric silica gel layer (130). Then, an aliphatic hydrocarbon solvent is supplied to the sulfuric silica gel layer (130), and after having passed through the sulfuric silica gel layer (130), passes through a treatment layer (140) including a carrier layer (141) with fixed permanganate and a silver nitrate silica gel layer (142). SOx gas generated in the sulfuric silica gel layer (130) is consumed when the aliphatic hydrocarbon solvent passes through the carrier layer (141), and a decomposition product generated in the sulfuric silica gel layer (130) is trapped by the silver nitrate silica gel layer (141).

## Description

### TECHNICAL FIELD

The present invention relates to a method for purifying oils, and specifically relates to a method for purifying oils for analyzing an organic halogenated substance contained in the oils. The present application claims a priority based on Japanese Application No. 2019-152402 filed in Japan on August 22, 2019, and the contents of which are incorporated herein by reference.

### BACKGROUND ART

There is a probability that food, atmospheric air, soils, and the like are contaminated with an organic halogenated substance with concerns about toxicity, such as dioxins and polychlorinated biphenyls. For this reason, each country imposes its own restrictions on an acceptable organic halogenated substance in food, atmospheric air, and the like. For example, according to food regulation standards (COMMISSION REGULATION (EU) No 1259/2011) in the European Union (EU), dioxins and prescribed polychlorinated biphenyls not belonging to dioxins are, for food such as meats including beef and pork, animal fats, eggs, and plant oil including olive oil, designated as organic halogenated substances as regulation subjects, and regulation values therefor are set. According to the Act on Special Measures against Dioxins (Act No. 105 of 1999) of these countries, regular analysis of dioxins contained in environmental samples such as exhaust gas from waste combustors, fly ash generated at waste combustors, industrial liquid waste, atmospheric air, soils, and environmental water including ground water, seawater, lake water, and river water has been made mandatory.

Normally, when contamination due to an organic halogenated substance in an evaluation target such as food is evaluated, a sample is collected from the evaluation target, and an analysis sample for the organic halogenated substance is prepared from such a sample. In a case where the evaluation target is those in the form of oil, such as animal fat or plant oil, a collected sample can be, as an analysis sample, used directly or in a form dissolved in an oil solvent as necessary. In a case where the evaluation target is a solid such as soil or solid food, an organic halogenated substance is, for example, extracted from the solid by a Soxhlet extraction method using an oil solvent, and such an oil solvent solution is used as an analysis sample. In a case where the sample is fluid such as atmospheric air or drink, an organic halogenated substance in the fluid is, for example, trapped and collected using a collector such as a filter, and thereafter, the collector is rinsed with an oil solvent or a Soxhlet extraction method using an oil solvent is applied to the collector. In this manner, the organic halogenated substance collected by the collector is extracted, and such an oil solvent solution is used as an analysis sample. Based on results obtained by application of the analysis sample obtained as described above to an analysis apparatus such as a gas chromatograph mass spectrometry (GC/MS), contamination due to the organic halogenated substance can be evaluated for the evaluation target.

The above-described analysis sample contains, as an impurity substance, various organic substances derived from the evaluation target in addition to the organic halogenated substance targeted for analysis, and the impurity substance might deface the analysis apparatus and might provide influence on the organic halogenated substance analysis results. For this reason, the above-described analysis sample is normally subjected to purification for removing the impurity substance in the course of preparation.

As an example of the purification method of this type, Patent Literature 1 discloses the method for purifying oily liquid containing polychlorinated biphenyls. This purification method includes the step of supplying an aliphatic hydrocarbon solvent to a sulfuric silica gel layer after the oily liquid has been added to the heated sulfuric silica gel layer, the step of supplying the aliphatic hydrocarbon solvent having passed through the sulfuric silica gel layer to a silver nitrate silica gel layer and causing the aliphatic hydrocarbon solvent to pass through the silver nitrate silica gel layer, the step of causing the aliphatic hydrocarbon solvent having passed through the silver nitrate silica gel layer to pass through an alumina layer, and the step of supplying a hydrophobic solvent which can dissolve the polychlorinated biphenyls to the alumina layer and causing the hydrophobic solvent to pass through the alumina layer to acquire the hydrophobic solvent having passed through the alumina layer. In this purification method, an impurity substance contained in the oily liquid is decomposed by reaction with the sulfuric silica gel layer. Such a decomposition product is, together with the polychlorinated biphenyls, held in the sulfuric silica gel layer. When the aliphatic hydrocarbon solvent is supplied to the sulfuric silica gel layer, such an aliphatic hydrocarbon solvent passes through the sulfuric silica gel layer and is supplied to the silver nitrate silica gel layer, and then, passes through the silver nitrate silica gel layer. At this point, part of the polychlorinated biphenyls and the decomposition product held in the sulfuric silica gel layer is dissolved in the aliphatic hydrocarbon solvent supplied to the sulfuric silica gel layer, and is supplied from the sulfuric silica gel layer to the silver nitrate silica gel layer. Part of the decomposition product contained in the aliphatic hydrocarbon solvent is adsorbed to and held in the silver nitrate silica gel layer. Meanwhile, the polychlorinated biphenyls contained in the aliphatic hydrocarbon solvent passes through the silver nitrate silica gel layer with the polychlorinated biphenyls being dissolved in the aliphatic hydrocarbon solvent. Next, when the aliphatic hydrocarbon solvent having passed through the silver nitrate silica gel layer, i.e., the aliphatic hydrocarbon solvent having dissolved the polychlorinated biphenyls, is supplied to and passes through the alumina layer, the polychlorinated biphenyls dissolved in the aliphatic hydrocarbon solvent are trapped by the alumina layer. Then, when the hydrophobic solvent which can dissolve the polychlorinated biphenyls is supplied to the alumina layer through which the aliphatic hydrocarbon solvent has passed and passes through the alumina layer, the polychlorinated biphenyls trapped by the alumina layer are dissolved in the hydrophobic solvent, and are extracted from the alumina layer. Then, the polychlorinated biphenyls are acquired as a hydrophobic solvent solution. This hydrophobic solvent solution is used as an analysis sample for the polychlorinated biphenyls.

The above-described purification method can effectively separate the polychlorinated biphenyls contained in the oily liquid and the impurity substance, and can acquire an analysis sample solution containing the polychlorinated biphenyls transferred to the hydrophobic solvent. However, since the sulfuric silica gel layer and the silver nitrate silica gel layer are used, sulfur oxide gas (SOx gas) or nitrogen oxide gas (NOx gas) providing influence on a human body and environment might be generated in the course of purification due to sulfuric acid and silver nitrate contained in these layers. It is assumed that the mechanism for generating these types of gas is according to the following chemical reaction.

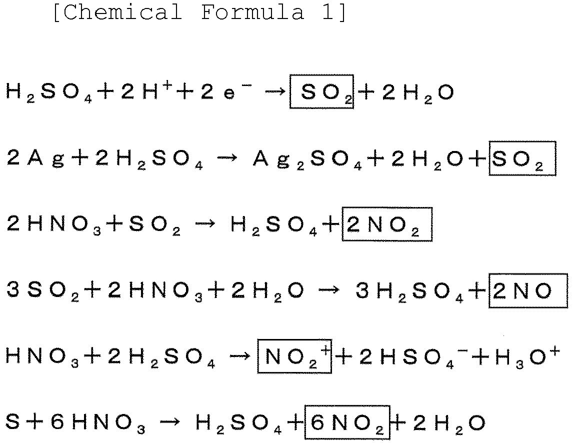

It is enough that in a case where the polychlorinated biphenyl concentration of the oily liquid targeted for application of the above-described purification method is relatively high, a small amount of oily liquid is added to the sulfuric silica gel layer, and as a result, the amount of generation of the above-described gas is suppressed to such an extremely small amount that the influence on the human body and the environment can be ignored. In a case where oily liquid of which the polychlorinated biphenyl concentration is an extremely small amount is targeted for purification in accordance with the EU food regulation standards for controlling, e.g., a polychlorinated biphenyl content close to a detection limit (a quantitative limit) in the GC/MS, the amount of the oily liquid to be added to a sulfuric silica gel layer needs to be increased considering, e.g., elimination of polychlorinated biphenyls in the course of purification. However, there is a probability that the amount of generation of the above-described gas increases to such an extent that the influence on the human body and the environment cannot be ignored as the addition amount increases.

Note that Patent Literature 2 discloses, as the method for purifying a dioxin solution in a case where an analysis sample for dioxins contained in the dioxin solution is prepared, a method in which the order of a sulfuric silica gel layer and a silver nitrate silica gel layer is opposite to that in Patent Literature 1, i.e., a method including the step of supplying an aliphatic hydrocarbon solvent to the silver nitrate silica gel layer after oily liquid has been added to the silver nitrate silica gel layer and the step of supplying the aliphatic hydrocarbon solvent having passed through the silver nitrate silica gel layer to the sulfuric silica gel layer and causing the aliphatic hydrocarbon solvent to pass through the sulfuric silica gel layer. This purification method can purify the dioxin solution with substantially no SOx gas and NOx gas being generated. However, since the rate of recovery of the dioxins in the analysis sample is significantly decreased when the amount of dioxin solution added to the silver nitrate silica gel layer is increased, the amount of dioxin solution which can be purified is limited.

### PRIOR ART LITERATURE

### PATENT LITERATURE

Patent Literature 1: WO 2008/123393 A
Patent Literature 2: WO 2014/192055 A

### DISCLOSURE OF THE INVENTION

### PROBLEMS TO BE SOLVED BY THE INVENTION

The present invention is to consume SOx gas and NOx gas, which might be generated in the course of purification, in the course of purification in a case where oils are purified using a sulfuric silica gel layer and a silver nitrate silica gel layer to analyze an organic halogenated substance contained in the oils.

### SOLUTIONS TO THE PROBLEMS

The present invention relates to the method for purifying oils for analyzing an organic halogenated substance contained in the oils. The purification method includes the step of adding the oils to a sulfuric silica gel layer, the step of supplying an aliphatic hydrocarbon solvent to the sulfuric silica gel layer to which the oils have been added, and the step of causing the aliphatic hydrocarbon solvent having passed through the sulfuric silica gel layer to pass through a treatment layer including a carrier layer with fixed permanganate and a silver nitrate silica gel layer.

In the purification method, an impurity substance contained in the oils added to the sulfuric silica gel layer is decomposed by reaction with the sulfuric silica gel layer. The aliphatic hydrocarbon solvent supplied to the sulfuric silica gel layer dissolves part of a decomposition product in the sulfuric silica gel layer and the organic halogenated substance in the oils, and passes through the sulfuric silica gel layer. Subsequently, the aliphatic hydrocarbon solvent passes through the treatment layer. At this point, the decomposition product dissolved in the aliphatic hydrocarbon solvent is trapped by the treatment layer, specifically the silver nitrate silica gel layer in the treatment layer, and is separated from the aliphatic hydrocarbon solvent. As a result, the impurity substance is removed from the organic halogenated substance contained in the aliphatic hydrocarbon solvent having passed through the treatment layer, and such an aliphatic hydrocarbon solvent is purified. In the course of such purification of the oils, SOx gas and NOx gas might be generated in the sulfuric silica gel layer and the treatment layer, but such gas is dissolved in the aliphatic hydrocarbon solvent and is consumed by reaction with the permanganate fixed to the carrier layer when the aliphatic hydrocarbon solvent passes through the treatment layer.

The carrier layer used in the purification method is, for example, an aluminum oxide layer with fixed permanganate.

In one form of the purification method, the aliphatic hydrocarbon solvent having passed through the sulfuric silica gel layer passes through the carrier layer and the silver nitrate silica gel layer in this order in the treatment layer.

Another form of the purification method further includes the step of causing the aliphatic hydrocarbon solvent having passed through the sulfuric silica gel layer to pass through an active silica gel layer before passing through the treatment layer.

The present invention according to another aspect relates to the tool for purifying oils for analyzing an organic halogenated substance contained in the oils. The purification tool includes a tubular body opening at both ends, a sulfuric silica gel layer charged into the tubular body, and a treatment layer including a carrier layer with fixed permanganate and a silver nitrate silica gel layer, the carrier layer and the silver nitrate silica gel layer being charged into the tubular body separately from the sulfuric silica gel layer.

In the case of purifying the oils by means of the tool, the oils are added to the sulfuric silica gel layer charged into the tubular body. An impurity substance contained in the added oils is decomposed by reaction with the sulfuric silica gel layer. An aliphatic hydrocarbon solvent is supplied to the sulfuric silica gel layer, and when the aliphatic hydrocarbon solvent passes through the sulfuric silica gel layer and the treatment layer in this order, the aliphatic hydrocarbon solvent dissolves part of a decomposition product in the sulfuric silica gel layer and the organic halogenated substance in the oils and passes through the sulfuric silica gel layer. Subsequently, the aliphatic hydrocarbon solvent passes through the treatment layer. At this point, the decomposition product dissolved in the aliphatic hydrocarbon solvent is trapped by the treatment layer, specifically the silver nitrate silica gel layer in the treatment layer, and is separated from the aliphatic hydrocarbon solvent. As a result, the impurity substance is removed from the organic halogenated substance contained in the aliphatic hydrocarbon solvent having passed through the treatment layer, and such an aliphatic hydrocarbon solvent is purified. In the course of such purification of the oils, SOx gas and NOx gas might be generated in the sulfuric silica gel layer and the treatment layer, but such gas is dissolved in the aliphatic hydrocarbon solvent and is consumed by reaction with the permanganate fixed to the carrier layer when the aliphatic hydrocarbon solvent passes through the treatment layer.

The carrier layer used in the purification tool is, for example, an aluminum oxide layer with fixed permanganate.

In one form of the purification tool, the treatment layer includes the carrier layer positioned between the sulfuric silica gel layer and the silver nitrate silica gel layer.

In another form of the purification tool, the tubular body is divided into a first portion filled with the sulfuric silica gel layer and a second portion filled with the treatment layer, and is formed in such a manner that the first portion and the second portion are joined to each other.

Still another form of the purification tool further includes an active silica gel layer charged into a portion between the sulfuric silica gel layer and the treatment layer in the tubular body.

### EFFECTS OF THE INVENTION

The method for purifying the oils according to the present invention uses the carrier layer with the fixed permanganate, and therefore, in a case where the oils are purified using the sulfuric silica gel layer and the silver nitrate silica gel layer for analyzing the organic halogenated substance contained in the oils, the SOx gas and the NOx gas which might be generated in the course of purification can be consumed in the course of purification.

The tool for purifying the oils according to the present invention is configured such that the tubular body is filled with the sulfuric silica gel layer and the treatment layer including the carrier layer with the fixed permanganate and the silver nitrate silica gel layer. Thus, when the tool is used for purifying the oils for analyzing the organic halogenated substance contained in the oils, the SOx gas and the NOx gas which might be generated in the course of purification can be consumed in the course of purification.

### BRIEF DESCRIPTION OF THE DRAWINGS

Fig. 1 is a schematic longitudinal sectional view of one form of an oil purification tool according to the present invention in a divided state.
Fig. 2 is a schematic longitudinal sectional view of the integrated purification tool according to the one form.
Fig. 3 is a schematic longitudinal sectional view of an analysis sample preparer employing the purification tool according to the one form.
Fig. 4 is a view of a purification tool according to a variation, Fig. 4 corresponding to Fig. 2.
Fig. 5 is a view of a purification tool according to another variation, Fig. 5 corresponding to Fig. 2.
Fig. 6 is a view of a comparative purification tool produced in Comparative Example 1, Fig. 6 corresponding to Fig. 2.
Fig. 7 is a photograph of a purification tool according to Example 1 before use in Example Evaluation 1.
Fig. 8 is a photograph of the purification tool according to Example 1 after use for oil sample purification in Example Evaluation 1.
Fig. 9 is a photograph of a purification tool according to Example 2 after use for oil sample purification in Example Evaluation 1.
Fig. 10 is a photograph of a purification tool according to Example 3 after use for oil sample purification in Example Evaluation 1.
Fig. 11 is a photograph of purification tools according to Example 1 and Examples 4 to 6 after use for oil sample purification in Example Evaluation 2.
Fig. 12 is a graph of results of Evaluation 5 for a first analysis sample of Example 1.
Fig. 13 is a graph of results of Evaluation 5 for a first analysis sample of Example 3.
Fig. 14 is a graph of results of Evaluation 6 for the first and second analysis samples of Example 1.
Fig. 15 is a graph of results of Evaluation 6 for the first and second analysis samples of Example 3.
Fig. 16 is a graph of results of Evaluation 7 for the examples.
Fig. 17 is a graph of results of Evaluation 8 for the examples.
Fig. 18 is a graph of results of Evaluation 9 in a case where test oils prepared from chicken egg oil are applied to Examples 7 to 10.
Fig. 19 is a graph of results of Evaluation 9 in a case where test oils prepared from beef tallow oil are applied to Examples 7 to 10.

### DESCRIPTION OF PREFERRED EMBODIMENTS

The present invention relates to purification of oils in a case where an organic halogenated substance contained in the oils is analyzed. Examples of the organic halogenated substance targeted for analysis include dioxins, polychlorinated biphenyls and polybrominated diphenyl ethers not belonging to dioxins. Examples of the oils which might contain the organic halogenated substance and are targeted for application of the present invention include animal fats derived from food animals such as eventoed ungulates including pigs and cows, poultries including chickens, and fish, edible fats such as plant oils including olive oil and sunflower oil, mineral oils used as, e.g., electric insulating oils, and extracts from environmental samples using oil solvents. As the animal fats, extracted oils obtained in such a manner that extraction operation using oil solvents is applied to meats and eggs are normally the oils targeted for application of the present invention. Examples of the environmental samples include solids such as fly ash generated from waste combustors and soils and fluids such as exhaust gas from waste combustors, industrial liquid waste, atmospheric air, blood, breast milk, and environmental water including groundwater, seawater, lake water, and river water. In a case where the environmental sample is a solid, the extract from the environmental sample is obtained from the solid by means of an oil solvent by an extraction method such as Soxhlet extraction. In a case where the environmental sample is fluid, the extract is obtained in such a manner that an organic halogenated substance in the fluid is trapped/collected by a collector and the extract is obtained from the collector by means of an oil solvent by an extraction method such as Soxhlet extraction.

Examples of the collector for collecting the organic halogenated substance from the fluid include an apparatus and a filter using a glass impinger described in "Method for Measurement of Dioxins in Exhaust Gas" according to Japanese Industrial Standards JIS K 0311 (2005). Examples of the filter include those described in Japanese Patent No. 3273796, WO 01/91883 A, and JP-A-2004-53388.

The oil solvent used for extracting the organic halogenated substance from the environmental sample is not limited to above as long as the organic halogenated substance can be dissolved in the oil solvent, and is normally an organic solvent. Normally, as the organic solvent, an aliphatic hydrocarbon solvent, specifically a non-polar aliphatic hydrocarbon solvent having a carbon number of 5 to 10, such as n-hexane, iso-octane, nonane, or decane, an aromatic hydrocarbon solvent such as toluene or xylene, or a polar organic solvent such as acetone, diethyl ether, or dichloromethane is used. Note that for the extract obtained using the aromatic hydrocarbon solvent, the solvent is preferably replaced with the above-described aliphatic hydrocarbon solvent upon application of the purification method of the present invention.

One form of a tool for purifying the oils according to the present invention will be described with reference to the figures.

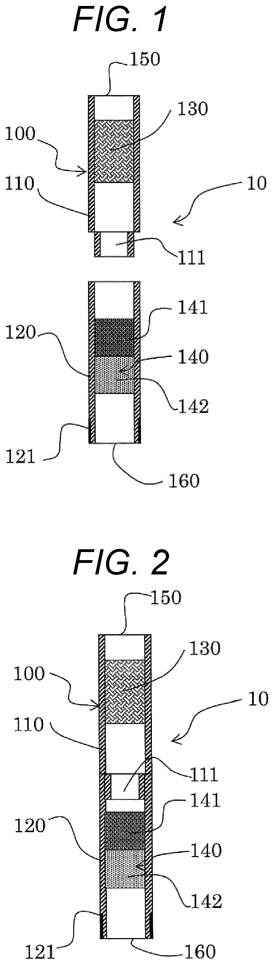

In Fig. 1, the purification tool 10 includes a tubular body 100 divided into a first portion 110 and a second portion 120. Any of the first portion 110 and the second portion 120 is a cylindrical member opening at both ends, and is made of a material having at least solvent resistance, chemical resistance, and thermal resistance, such as glass, resin, or metal having these properties. The first portion 110 has a protruding portion 111 at a lower end as viewed in Fig. 1. The protruding portion 111 is configured such that the outer diameter thereof substantially matches the inner diameter of the second portion 120, and can be air- and liquid-tightly fitted in an upper end portion of the second portion 120 as viewed in Fig. 1.

In the first portion 110, a sulfuric silica gel layer 130 is provided. The sulfuric silica gel layer 130 is formed by charging of sulfuric silica gel. The sulfuric silica gel used herein is prepared in such a manner that concentrated sulfuric acid is uniformly added to a surface of silica gel (normally, activated silica gel of which the degree of activity has been enhanced by heating) in the form of grain with a particle size of about 30 µm to 1 mm.

The amount of sulfuric acid carried on the silica gel is normally preferably set to 20% to 55% with respect to a silica gel weight and more preferably 30% to 50%. In a case where the carried sulfuric acid amount is less than 20%, there is a probability that the efficiency of decomposition of an impurity substance contained in the oils is degraded and it is accordingly difficult to separate the organic halogenated substance in the oils from the impurity substance. Conversely, in a case where the carried sulfuric acid amount exceeds 55%, there is a probability that the efficiency of purification of the oils is degraded because when the oils are added to the sulfuric silica gel layer 130, reaction between the carried sulfuric acid and the impurity substance at such an oil-added portion locally progresses and a later-described aliphatic hydrocarbon solvent is less likely to pass through the sulfuric silica gel layer 130.

The density of the sulfuric silica gel in the sulfuric silica gel layer 130 is not specifically limited, but is normally preferably set to 0.3 to 1.1 g/cm³ and more preferably 0.5 to 1.0 g/cm³. In a case where the density is lower than 0.3 g/cm³, there is a probability that the added oils quickly pass through the sulfuric silica gel layer 130 and the efficiency of decomposition of the impurity substance is degraded. Conversely, in a case where the density exceeds 1.1 g/cm³, there is a probability that the added oils are less likely to penetrate the sulfuric silica gel layer 130 and it takes long time to decompose the impurity substance while the efficiency of decomposition of the impurity substance is degraded.

The second portion 120 has, at an outer peripheral portion of a lower end as viewed in Fig. 1, a spiral portion 121 to be coupled to a trapper 200 used in a later-described preparation apparatus 1, and has a treatment layer 140 inside. The treatment layer 140 includes a carrier layer 141 with fixed permanganate and a silver nitrate silica gel layer 142 arranged below the carrier layer 141 in Fig. 1.

The carrier layer 141 is a layer of a carrier in the form of grain, such as a layer obtained in such a manner that permanganate is fixed to aluminum oxide, silica gel (normally, activated silica gel of which the degree of activity has been enhanced by heating), crystalline aluminosilicate such as zeolite, or a mixture of any combination thereof. The permanganate used herein is not specifically limited as long as the permanganate is used as an oxidant, and examples thereof include potassium permanganate, sodium permanganate, silver permanganate, magnesium permanganate, calcium permanganate, barium permanganate, and ammonium permanganate. A single type of permanganate may be used alone, or two or more types of permanganate may be used in combination.

The carrier layer 141 is prepared in such a manner that after a permanganate solution has been uniformly added to a surface of a carrier in the form of grain having a particle size of about 10 to 500 µm, moisture is removed by heating under a reduced pressure such that a certain degree of moisture content is maintained. The amount of permanganate fixed to the carrier is normally preferably set to at least 3% with respect to a carrier weight and more preferably at least 4%. In a case where the fixed permanganate amount is less than 3%, there is a probability that the capacity of consuming SOx gas or NOx gas generated in the course of purification of the oils is degraded. A greater fixed permanganate amount leads to a higher capacity of consuming the SOx gas or the NOx gas, and for this reason, there is little need to set an upper limit. However, there is normally a limitation due to the solubility of the permanganate in the permanganate solution added to the carrier.

The water content of the carrier layer 141 is generally preferably set to 3% to 10% with respect to the carrier weight and more preferably 4% to 6%. In a case where the water content is equal to or lower than 3%, there is a probability that the capacity of consuming the SOx gas or the NOx gas generated in the course of purification of the oils is significantly degraded. On the other hand, in a case where the water content exceeds 10%, there is a probability that such moisture also acts on the silver nitrate silica gel layer 142 in the treatment layer 140 and the water content of the silver nitrate silica gel layer 142 is increased. As a result, there is a probability that an oil purification effect is degraded.

The water content of the carrier layer 141 is preferably properly set according to the carrier. For example, in a case where the carrier is aluminum oxide, the water content of the carrier layer 141 is preferably set to 4% to 6% and more preferably 4.5% to 5%. In a case where the carrier is silica gel, the water content of the carrier layer 141 is preferably set to 3% to 20% which is higher than that in a case where the carrier is aluminum oxide and more preferably 4% to 10%.

As the carrier layer 141, one using aluminum oxide as a carrier and having potassium permanganate fixed to the aluminum oxide is preferably used because an excellent impurity substance treatment capacity is exhibited and such a layer is suitable to purification of a greater amount of oils. For example, one is preferably used, which is formed in such a manner that aluminum oxide is baked at 450°C to 600°C for about 1 to 12 hours such that moisture and an adhering organic substance are removed, and the resultant aluminum oxide is injected into and uniformly mixed with a potassium permanganate solution prepared using ionexchanged water or distilled water and is then dried using an evaporator such that the water content thereof falls within the above-described range. Specifically, as the potassium permanganate solution, one obtained in such a manner that 3% to 5% of potassium permanganate with respect to the weight of the aluminum oxide to be injected is dissolved and adjusted such that the fixed potassium permanganate amount reaches 3% to 5% with respect to an aluminum oxide weight is preferably used.

The density of the carrier, to which the permanganate is fixed, in the carrier layer 141 is not specifically limited, but is normally preferably set to 1.0 to 1.4 g/cm³ and more preferably 1.1 to 1.2 g/cm³. In a case where the density is lower than 1.0 g/cm³, there is a probability that the capacity of consuming the SOx gas or the NOx gas generated in the course of purification of the oils is degraded. Conversely, in a case where the density exceeds 1.4 g/cm³, there is a probability that the later-described aliphatic hydrocarbon solvent is less likely to pass through the carrier layer 141 and the efficiency of purification of the oils is degraded.

The silver nitrate silica gel layer 142 is formed by charging of silver nitrate silica gel. The silver nitrate silica gel used herein is prepared in such a manner that after a silver nitrate solution has been uniformly added to a surface of silica gel (normally, activated silica gel of which the degree of activity has been enhanced by heating) in the form of grain having a particle size of about 40 to 210 µm, moisture is removed by heating under a reduced pressure. The amount of silver nitrate carried on the silica gel is normally preferably set to 5% to 20% with respect to a silica gel weight. In a case where the carried silver nitrate amount is lower than 5%, there is a probability that the impurity substance or a decomposition product thereof is less likely to be trapped by the silver nitrate silica gel layer 142 and the oil purification effect is degraded. Conversely, in a case where the carried silver nitrate amount exceeds 20%, a silver ion amount in the silver nitrate silica gel layer 142 increases, and for this reason, there is a probability that the organic halogenated substance is likely to be adsorbed/trapped and part of the organic halogenated substance is less likely to be recovered in the course of purification of the oils.

The water content of the silver nitrate silica gel layer 142 is generally preferably set to 2% to 10% with respect to the silica gel weight and more preferably 3.5% to 5%. In a case where the water content is equal to or lower than 2%, the activity of silver ions in the silver nitrate silica gel layer 142 is enhanced, and for this reason, there is a probability that the organic halogenated substance is likely to be adsorbed/trapped and part of the organic halogenated substance is less likely to be recovered in the course of purification of the oils. Conversely, in a case where the water content exceeds 10%, there is a probability that the oil purification effect is degraded.

The density of the charged silver nitrate silica gel in the silver nitrate silica gel layer 142 is not specifically limited, but is normally preferably set to 0.3 to 0.8 g/cm³ and more preferably 0.4 to 0.7 g/cm³. In a case where the density is lower than 0.3 g/cm³, there is a probability that the capacity of consuming the SOx gas or the NOx gas generated in the course of purification of the oils is degraded. Conversely, in a case where the density exceeds 0.8 g/cm³, there is a probability that the later-described aliphatic hydrocarbon solvent is less likely to pass through the carrier layer 141 upon purification of the oils and the efficiency of purification of the oils is degraded.

As illustrated in Fig. 2, the first portion 110 and the second portion 120 are liquid- and air-tightly integrated with each other in such a manner that the protruding portion 111 of the first portion 110 is fitted in the upper end side of the second portion 120 as viewed in Fig. 1, and accordingly, the continuous tubular body 100 having openings 150, 160 at an upper end portion of the first portion 110 and a lower end portion of the second portion 120 is formed as the purification tool 10.

The size of the purification tool 10 can be set as necessary according to the amount of oils to be purified. Although not specifically limited, any of the first portion 110 and the second portion 120 is, in a case where the amount of oils is, e.g., about 1 to 20 mL, preferably set to an inner diameter of 10 to 20 mm and a length of about 100 to 300 mm at a portion into which a required layer can be charged.

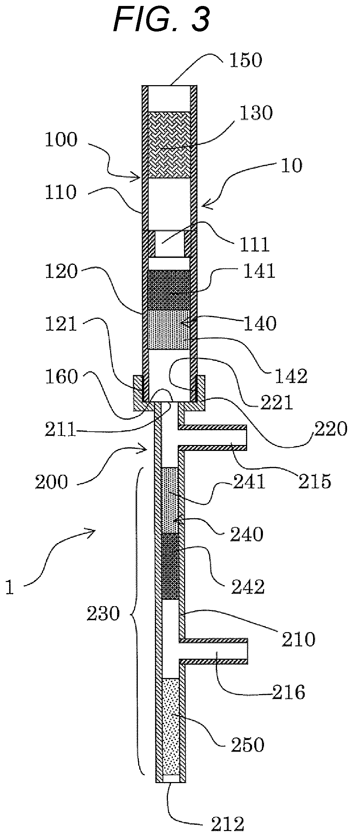

Next, an example of a preparer, which uses the above-described purification tool 10, for an analysis sample for analyzing the organic halogenated substance contained in the oils will be described with reference to Fig. 3. The preparer of this example is more specifically for preparing a dioxin analysis sample from oils which might contain dioxins as one example of the organic halogenated substance. The dioxins are generally a collective term of polychlorinated dibenzo-p-dioxins (PCDDs), polychlorinated dibenzofurans (PCDFs), and dioxin-like polychlorinated biphenyls (DL-PCBs). Of 209 types of polychlorinated biphenyls (PCBs), the DL-PCBs are PCBs having toxicity similar to those of the PCDDs and the PCDFs, and include non-ortho PCBs and mono-ortho PCBs.

In Fig. 3, the preparer 1 mainly includes the purification tool 10 and the dioxin trapper 200, and the purification tool 10 is attached to the trapper 200.

The trapper 200 includes a pipe body 210. The pipe body 210 is formed using a material similar to that of the tubular body 100 of the purification tool 10 and is formed in a continuous cylindrical shape opening at both ends, the pipe body 210 having an opening 211 at one end and an opening 212 at the other end. An attachment portion 220 for the purification tool 10 is formed on an opening 211 side of the pipe body 210, and a spiral portion 221 corresponding to the spiral portion 121 of the second portion 120 is formed at an inner peripheral surface of the attachment portion 220. Moreover, the pipe body 210 has two branched paths opening at tip ends, i.e., a first branched path 215 and a second branched path 216 provided with a clearance.

The pipe body 210 is filled with a trapping layer 230. The trapping layer 230 is for trapping the dioxins contained in the oils with the dioxins being fractionated into a dioxin group including the non-ortho PCBs, the PCDDs, and the PCDFs and the mono-ortho PCBs, and includes a first layer 240 and a second layer 250. The first layer 240 and the second layer 250 are charged into the pipe body 210 with a clearance. More specifically, the first layer 240 is charged into the pipe body 210 between the first branched path 215 and the second branched path 216, and the second layer 250 is charged into the pipe body 210 between the second branched path 216 and the opening 212.

As illustrated in Fig. 3, the first layer 240 includes an activated carbon-containing silica gel layer 241 and a graphite-containing silica gel layer 242 arranged below the activated carbon-containing silica gel layer 241. The activated carbon-containing silica gel layer 241 is made of a mixture of activated carbon and silica gel in the form of grain. Such a mixture may be activated carbon-dispersed silica gel obtained in such a manner that activated carbon and silica gel are merely mixed with each other, or may be activated carbon-embedded silica gel obtained in such a manner that a mixture of sodium silicate (water glass) and activated carbon reacts with mineral acid. As the activated carbon, various commercially-available products can be used. Normally, one provided in the form of grain or powder having a particle size of about 40 to 100 µm and formed such that the specific surface area thereof measured by a BET method is 100 to 1,200 m²/g, specifically 500 to 1,000 m²/g, is preferred. Silica gel used for the activated carbon-dispersed silica gel is normally in the form of grain having a particle size of about 40 to 210 µm. Such silica gel may be one of which the degree of activity has been enhanced as necessary by heating.

The percentage of the activated carbon in the mixture of the activated carbon and the silica gel is preferably 0.013% to 5.0% by weight and more preferably 0.1% to 3.0% by weight. In a case where the activated carbon is less than 0.013% by weight or exceeds 5.0% by weight, there is a probability that the capacity of the first layer 240 for adsorbing PCDDs with greater chlorine numbers or PCDFs with greater chlorine numbers is degraded.

The density of the charged activated carbon-containing silica gel layer 241 is not specifically limited, but is normally preferably set to 0.3 to 0.8 g/cm³ and more preferably 0.45 to 0.6 g/cm³.

The graphite-containing silica gel layer 242 is, in the first layer 240, arranged adjacent to the activated carbon-containing silica gel layer 241, and is formed of a mixture obtained in such a manner that graphite and silica gel in the form of grain are merely mixed with each other. As the graphite, various commercially-available products can be used. Normally, one provided in the form of grain or powder having a particle size of about 40 to 200 µm and formed such that the specific surface area thereof measured by the BET method is 10 to 500 m²/g, specifically 50 to 200 m²/g, is preferred. Moreover, as the silica gel, one similar to that for the activated carbon-containing silica gel layer 241 is used.

The percentage of the graphite in the mixture of the graphite and the silica gel is preferably 2.5% to 50% by weight and more preferably 5% to 25% by weight. In a case where the graphite is less than 2.5% by weight, there is a probability that the capacity of the first adsorption layer 240 for adsorbing the non-ortho PCBs is degraded. Conversely, in a case where the graphite exceeds 50% by weight, there is a probability that non-DL-PCBs, particularly non-DL-PCBs with a chlorine number of 1 to 2, are easily adsorbable in the first layer 240.

The density of the charged graphite-containing silica gel layer 242 is not specifically limited, but is normally preferably set to 0.2 to 0.6 g/cm³ and more preferably 0.3 to 0.5 g/cm³.

The percentages of the activated carbon-containing silica gel layer 241 and the graphite-containing silica gel layer 242 in the first layer 240 are preferably set such that the volume ratio (A:B) of the former (A) to the latter (B) is 1:1 to 1:12 and more preferably 1:1 to 1:9. In a case where the percentage of the activated carbon-containing silica gel layer 241 is lower than that in such a volume ratio, there is a probability that the capacity of the first layer 240 for adsorbing part of the PCDDs and the PCDFs, specifically PCDDs and PCDFs with a chlorine number of 8, is degraded. Conversely, in a case where the percentage of the activated carbon-containing silica gel layer 241 is higher, there is a probability that the mono-ortho PCBs are likely to be adsorbed in the first layer 240.

The second layer 250 is made of aluminum oxide in the form of grain. The aluminum oxide used herein may be any of basic aluminum oxide, neutral aluminum oxide, and acidic aluminum oxide. The degree of activity of the aluminum oxide is not specifically limited. The preferred particle size of the aluminum oxide is normally 40 to 300 µm.

The density of the charged oxide aluminum in the second layer 250 is not specifically limited, but is normally preferably set to 0.5 to 1.2 g/cm³ and more preferably 0.8 to 1.1 g/cm³.

The size of the pipe body 210 can be set as necessary according to the amount of oils purified by the purification tool 10. Although not specifically limited, the size of the pipe body 210 is, in a case where the purification tool 10 has the above-described size, preferably set such that an inner diameter is 3 to 10 mm, the length of a portion into which the first layer 240 is chargeable is about 20 to 80 mm, and the length of a portion into which the second layer 250 is chargeable is about 20 to 80 mm.

The trapper 200 is air- and liquid-tightly coupled to the purification tool 10 in such a manner that the spiral portion 221 of the attachment portion 220 is attached to the spiral portion 121 of the purification tool 10.

Next, the method for preparing, using the preparer 1, the analysis sample for analyzing the dioxins contained in the oils will be described. The preparation method mainly includes an oil purification step, a dioxin fractionating step, and a dioxin extraction step.

### <Oil Purification Step>

At this step, the preparer 1 is normally placed in a standing state such that the purification tool 10 is on the upper side, and oils are added to the sulfuric silica gel layer 130 through the opening 150 of the purification tool 10.

The oils to be injected herein are normally existing edible fats, mineral oils, or extracts from environmental samples. In a case where the oils are the extracts from the environmental samples, if the extract uses an aliphatic hydrocarbon solvent, a moderate amount of extract can be directly added to the sulfuric silica gel layer 130. In a case where the extract is an organic solvent other than the aliphatic hydrocarbon solvent, such as one obtained by extraction using an aromatic hydrocarbon solvent such as toluene, such an extract can be added to the sulfuric silica gel layer 130 with the aromatic hydrocarbon solvent for extraction being replaced with an aliphatic hydrocarbon solvent. In a case where the oils are the edible fats or the mineral oils, one subjected to dilution using the same solvent as the aliphatic hydrocarbon solvent is preferably added to the sulfuric silica gel layer 130. As the aliphatic hydrocarbon solvent for dilution, the same solvent as the later-described aliphatic hydrocarbon solvent to be supplied to the purification tool 10 is preferably used.

The amount of oils added to the sulfuric silica gel layer 130 is normally preferably about 1 to 10 mL. In the case of the extracts from the environmental samples, part of the extraction solvent or the replaced solvent may be distilled to form concentrated liquid, and the amount of concentrated liquid to be added may be set as described above. In the case of the edible fats or the mineral oils, it is preferably set such that the addition amount after dilution is around the upper limit of the above-described range.

Next, the sulfuric silica gel layer 130 to which the oils have been added is heated. A heating temperature is preferably set to equal to or higher than 60°C and more preferably equal to or higher than 80°C. By such heating, an impurity substance contained in the oils having penetrated the sulfuric silica gel layer 130 reacts with the sulfuric silica gel layer 130 and is decomposed. In a case where the heating condition is lower than 60°C, the reaction between the impurity substance and the sulfuric silica gel layer 130 is less likely to progress, and for this reason, there is a probability that part of the impurity substance remains in an analysis sample and the reliability of an analysis result obtained using the analysis sample is degraded. Although the upper limit of the heating temperature is not specifically limited, the upper limit is normally preferably controlled to equal to or lower than the boiling temperature of the added oils, considering safety. Moreover, a heating time is preferably set to at least 30 minutes for sufficiently ensuring the time of the reaction between the impurity substance and the sulfuric silica gel layer 130.

At this step, the reaction between the sulfuric silica gel layer 130 and the impurity substance and thermal decomposition of sulfuric acid progress, and for this reason, SOx gas might be generated.

Next, the aliphatic hydrocarbon solvent is supplied to the sulfuric silica gel layer 130. The aliphatic hydrocarbon solvent to be supplied herein can dissolve dioxins, and is preferably an aliphatic saturated hydrocarbon solvent having a carbon number of 5 to 8. For example, n-pentane, n-hexane, n-heptane, n-octane, iso-octane, or cyclohexane is preferably used. These solvents may be used in combination, as necessary. Supply of the aliphatic hydrocarbon solvent may be started during heating of the sulfuric silica gel layer 130, or may be started after the end of such heating.

At this step, the aliphatic hydrocarbon solvent is supplied into the first portion 110 through the opening 150. The supplied aliphatic hydrocarbon solvent penetrates the sulfuric silica gel layer 130, and passes through such a layer. At this point, the aliphatic hydrocarbon solvent dissolves the dioxins contained in the oils, a decomposition product of the impurity substance, and the impurity substance (this impurity substance normally includes non-DL-PCBs) remaining without being decomposed, and the SOx gas, and an aliphatic hydrocarbon solvent solution containing the dioxins, flows from the first portion 110 to the second portion 120 and passes through the treatment layer 140.

The SOx gas contained in the aliphatic hydrocarbon solvent from the first portion 110 reacts with permanganate when the aliphatic hydrocarbon solvent passes through the carrier layer 141, and is consumed. In a case where potassium permanganate is used as the permanganate, it is assumed that the reaction is as follows. Water (H₂O) relating to such reaction is moisture contained in the carrier layer 141.

[Chemical Formula 2] **2KMnO₄+5SO₂,+2H₂O** → **2MnSO₄+2H₂SO₄+K₂SO₄**

Meanwhile, the decomposition product and the impurity substance contained in the aliphatic hydrocarbon solvent from the first portion 110 are oxidized by the permanganate when the aliphatic hydrocarbon solvent passes through the carrier layer 141. In a case where the decomposition product and the impurity substance are, for example, unsaturated fatty acid or alkene (hydrocarbon having a double bond), such product and substance are, due to oxidation action of the permanganate, carbonylated after having been glycoled, and part of the resultant is oxidized into carboxylic acid. In a case where the generated carboxylic acid is formic acid, the carboxylic acid is further oxidized and decomposed into water and carbon dioxide.

The decomposition product and the impurity substance remaining in the aliphatic hydrocarbon solvent having passed through the carrier layer 141 are trapped by the silver nitrate silica gel layer 142 when the aliphatic hydrocarbon solvent passes through such a layer. As a result, the aliphatic hydrocarbon solvent having passed through the treatment layer 140 turns into a dioxin purification solution which stores and contains the dioxins contained in the oils and from which the SOx gas has been consumed and the decomposition product and the impurity substance have been significantly removed.

The aliphatic hydrocarbon solvent can be, as necessary, supplied to the sulfuric silica gel layer 130 while being pressurized. For example, the sulfuric silica gel layer 130 might be clogged with the decomposition product generated due to the reaction between the sulfuric silica gel layer 130 and the impurity substance in the oils. In this case, the aliphatic hydrocarbon solvent is supplied while being pressurized, so that the aliphatic hydrocarbon solvent can stably and smoothly pass through the sulfuric silica gel layer 130.

### <Dioxin Fractionating Step>

After having passed through the treatment layer 140, the aliphatic hydrocarbon solvent flows into the trapper 200 from the opening 160 at the lower end of the second portion 120 through the opening 211 at the upper end of the trapper 200. After having passed through the trapping layer 230, the aliphatic hydrocarbon solvent is discharged through the opening 212. At this point, the dioxins contained in the aliphatic hydrocarbon solvent from the treatment layer 140 are trapped by the trapping layer 230, and are separated from the aliphatic hydrocarbon solvent. More specifically, in the trapping layer 230, non-ortho PCBs, PCDDs, and PCDFs of the dioxins are adsorbed to the first layer 240, and mono-ortho PCBs of the dioxins are adsorbed to the second layer 250. Thus, the dioxins contained in the aliphatic hydrocarbon solvent are fractionated into a dioxin group including the non-ortho PCBs, the PCDDs, and the PCDFs and the mono-ortho PCBs in the trapping layer 230.

Part of the impurity substance remaining in the aliphatic hydrocarbon solvent having passed through the treatment layer 140 is, together with the aliphatic hydrocarbon solvent, discarded after having passed through the trapping layer 230, and another part of the impurity substance is trapped by the trapping layer 230. For example, the non-DL-PCBs and PCDE are, together with the mono-ortho PCBs, adsorbed to the second layer 250. Moreover, an impurity substance such as paraffins passes through the trapping layer 230 together with the aliphatic hydrocarbon solvent, and is discharged through the opening 212.

After the aliphatic hydrocarbon solvent has been discharged through the opening 212, an air flow is injected into the purification tool 10 through the opening 150 to dry the sulfuric silica gel layer 130, the treatment layer 140, and the trapping layer 230. The air flow injected into the purification tool 10 through the opening 150 flows into the trapper 200 after having passed through the sulfuric silica gel layer 130 and the treatment layer 140, and is discharged through the opening 212 after having passed through the trapping layer 230. At this point, the aliphatic hydrocarbon solvent remaining in the sulfuric silica gel layer 130 and the treatment layer 140 is pushed out by the passing air flow to move to the trapping layer 230, and together with the aliphatic hydrocarbon solvent remaining in the trapping layer 230, is discharged through the opening 212. As a result, the sulfuric silica gel layer 130, the treatment layer 140, and the trapping layer 230 are dried.

### <Dioxin Extraction Step>

At this step, the dioxins having adsorbed to the trapping layer 230 are extracted. First, the opening 150 of the purification tool 10 and the first branched path 215 of the trapper 200 are air-tightly closed, and a solvent which can dissolve the dioxins is supplied into the trapper 200 through the opening 212. The solvent supplied into the trapper 200 flows into the second branched path 216 through the second layer 250, and is discharged from an end portion of the second branched path 216. At this point, the solvent extracts the PCBs adsorbed to the second layer 250, and turns into an extraction solution. Thus, the extraction solution discharged from the end portion of the second branched path 216 is acquired, and accordingly, an analysis sample (a first analysis sample) for the mono-ortho PCBs and the non-DL-PCBs is obtained.

The solvent supplied into the trapper 200 through the opening 212 and being able to dissolve the dioxins can be selected according to the later-described method for analyzing the dioxins. In the case of employing a gas chromatography method as the analysis method, a solvent suitable for such a method, such as toluene or benzene, can be used. Alternatively, a solvent mixture obtained in such a manner that an aliphatic hydrocarbon solvent or an organic chlorine-based solvent is added to toluene or benzene can be used. In the case of using the solvent mixture, the percentage of the toluene or the benzene is set to equal to or higher than 50% by weight. Examples of the aliphatic hydrocarbon solvent used in the solvent mixture include n-pentane, n-hexane, n-heptane, n-octane, iso-octane, and cyclohexane. Moreover, examples of the organic chlorine-based solvent include dichloromethane, trichloromethane, and tetrachloromethane. Of these extraction solvents, the toluene is specifically preferred because the dioxins can be extracted from the fractionating tool 200 by use of a small amount of solvent.

In the case of employing a bioassay method as the analysis method, a solvent suitable for such a method, such as hydrophilic solvents including dimethylsulfoxide (DMSO) and methanol, can be used.

At this step, the second layer 250 may be heated from the outside of the pipe body 210. In the case of heating the second layer 250, the mono-ortho PCBs and the non-DL-PCBs can be, with a reduced usage of the solvent for extraction, efficiently extracted from the second layer 250. The temperature of heating of the second layer 250 is normally preferably controlled to from about 50°C to the boiling point of the extraction solvent or lower, specifically equal to or lower than 95°C.

After the first analysis sample has been obtained through the above-described operation, the first branched path 215 is opened and the second branched path 216 is air-tightly closed while the air-tightly-closed state of the opening 150 of the purification tool 10 is maintained. Then, the solvent which can dissolve the dioxins is supplied into the trapper 200 through the opening 212 again. The solvent supplied into the trapper 200 passes through the second layer 250 and the first layer 240 in this order, and flows into the first branched path 215. Then, the solvent is discharged from an end portion of the first branched path 215. At this point, the solvent dissolves the dioxin group including the non-ortho PCBs, the PCDDs, and the PCDFs adsorbed to the first layer 240, and turns into an extraction solution containing the extracted dioxin group. Thus, the extraction solution discharged from the end portion of the first branched path 215 is acquired, and accordingly, an analysis sample (a second analysis sample) for the non-ortho PCBs, the PCDDs, and the PCDFs is obtained.

As the solvent supplied into the trapper 200 and being able to dissolve the dioxins, one similar to that used for preparation of the first analysis sample is normally used according to the later-described method for analyzing the dioxins.

At this step, the first layer 240 may be heated from the outside of the pipe body 210. In the case of heating the first layer 240, the dioxin group including the non-ortho PCBs, the PCDDs, and the PCDFs can be, with a reduced usage of the solvent for extraction, efficiently extracted from the first layer 240. The temperature of heating of the first layer 240 is normally preferably controlled to from about 50°C to the boiling point of the extraction solvent or lower, specifically equal to or higher than 80°C and equal to or lower than 95°C.

The first and second analysis samples obtained by fractionation in the above-described operation are separately applied to analysis of the dioxins. According to the type of solvent used for extracting the dioxins trapped by the trapper 200, a GC/MS method such as GC-HRMS, GC-MSMS, GC-QMS, or ion trap GC/MS, a gas chromatography method such as GC/ECD, or a bioassay method can be normally employed as the analysis method.

In analysis of the first analysis sample, such an analysis sample is separated from the dioxin group including the non-ortho PCBs, the PCDDs, and the PCDFs, and therefore, the mono-ortho PCBs can be quantified with a high accuracy without influence of the dioxin group. Moreover, such an analysis sample contains the non-DL-PCBs together with the mono-ortho PCBs, and therefore, the non-DL-PCBs contained in the oils can be also quantified with a high accuracy. For example, according to food regulation standards (COMMISSION REGULATION (EU) No 1259/2011) in the European Union (EU), prescribed non-DL-PCBs (six types of PCBs of which IUPAC numbers are #28, #52/69, #101, #138, #153, and #180 and of which chlorine numbers are 3 to 7) as regulation subjects can be quantified by analysis of this analysis sample.

On the other hand, in analysis of the second analysis sample, such an analysis sample is separated from the mono-ortho PCBs and the non-DL-PCBs, and therefore, the non-ortho PCBs, the PCDDs, and the PCDFs can be quantified with a high accuracy without influence of these PCBs.

Note that GC-MSMS or GC-TOFMS can be used as the GC/MS method, and in this case, two types of analysis samples are mixed so that analysis can be performed at the same time.

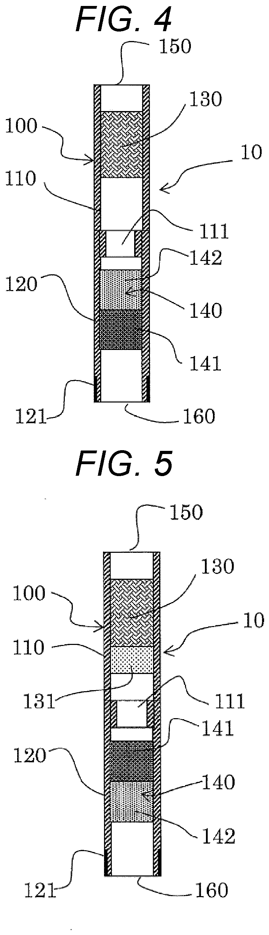

The above-described embodiment can be changed as follows, for example.
(1) The purification tool 10 can be configured such that arrangement of the carrier layer 141 and the silver nitrate silica gel layer 142 is switched in the treatment layer 140 of the second portion 120. That is, as illustrated in Fig. 4, in the treatment layer 140, the silver nitrate silica gel layer 142 can be arranged on the upper side and the carrier layer 141 can be arranged on the lower side.

In the case of preparing the analysis sample by means of the purification tool 10 according to such a modification, part of a decomposition product and an impurity substance contained in an aliphatic hydrocarbon solvent having flowed from the first portion 110 to the second portion 120 are trapped by the silver nitrate silica gel layer 142 when the aliphatic hydrocarbon solvent passes through such a layer, and part of SOx gas contained in the aliphatic hydrocarbon solvent reacts with silver nitrate to generate NOx gas. The decomposition product and the impurity substance remaining in the aliphatic hydrocarbon solvent having passed through the silver nitrate silica gel layer 142 are oxidized by permanganate when the aliphatic hydrocarbon solvent passes through the carrier layer 141. In a case where the decomposition product and the impurity substance are, for example, unsaturated fatty acid or alkene (hydrocarbon having a double bond), these substances are decomposed through the above-described oxidization process in response to action of the permanganate. Part of this decomposition product and other impurity substances remains in the carrier layer 141, and the remaining part is, as the aliphatic hydrocarbon solvent, discharged through the opening 212. Meanwhile, the SOx gas and the NOx gas contained in the aliphatic hydrocarbon solvent from the silver nitrate silica gel layer 142 react with the permanganate when the aliphatic hydrocarbon solvent passes through the carrier layer 141, and are consumed. In the case of using potassium permanganate as the permanganate, the SOx gas consumption reaction made by the potassium permanganate is as described above, but the NOx gas consumption reaction made by the potassium permanganate is assumed to be made according to (i) and (ii) below. Water (H₂O) relating to these types of reaction is moisture contained in the carrier layer 141.

[Chemical Formula 3]

**3NO₂+H₂O** → **2HNO₃+NO** (i)

**2MnO₄⁻+6H⁺+5NO⁻** → **2Mn²⁺+5NO₂+3₂HO** (ii)

In the reaction (ii), NO generated in the reaction (i) is consumed, and NO₂ is generated. NO₂ generated is targeted for consumption in the reaction (i). Thus, it is assumed that consumption of the NOx gas progresses and the NOx gas is gradually decreased and eliminated in such a manner that the reaction (i) and the reaction (ii) are repeated in this order or progress in parallel in the carrier layer 141.

As a result, the aliphatic hydrocarbon solvent having passed through the treatment layer 140 turns into a dioxin purification solution which stores and contains the dioxins contained in the oils and from which the SOx gas and the NOx gas have been consumed and the decomposition product and the impurity substance have been significantly removed.

(2) The purification tool 10 according to each embodiment described above may further include an active silica gel layer between the sulfuric silica gel layer 130 and the treatment layer 140. For example, as illustrated in Fig. 5, in the first portion 110, an active silica gel layer 131 may be arranged adjacent to a lower portion of the sulfuric silica gel layer 130. Active silica gel forming the active silica gel layer 131 is one of which the degree of activity has been enhanced by heating of silica gel in the form of grain. As the active silica gel, one having a particle size of about 30 to 210 µm is normally preferably used.

In a case where the purification tool 10 has the above-described active silica gel layer 131, an aliphatic hydrocarbon solvent having passed through the sulfuric silica gel layer 130 is supplied to the treatment layer 140 of the second portion 120 after having passed through the active silica gel layer 131. When the aliphatic hydrocarbon solvent to be supplied to the treatment layer 140 passes through the active silica gel layer 131, part of an impurity substance and a decomposition product in the sulfuric silica gel layer 130 are trapped and removed. Thus, clogging of the treatment layer 140 with the impurity substance or the like is reduced, and the degree of purification after passage through the treatment layer 140 tends to be high. Thus, with use of an analysis sample prepared using the purification tool 10 in this form, an analysis result can be expected with a higher reliability.

The active silica gel layer 131 may be arranged with a space from the lower portion of the sulfuric silica gel layer 130 in the first portion 110. Alternatively, the active silica gel layer 131 can be arranged adjacent to an upper portion of the treatment layer 140 or with a space from the upper portion of the treatment layer 140 in the second portion 120. As another alternative, the active silica gel layer 131 can be arranged in both of the first portion 110 and the second portion 120.

Each figure as a reference in the above-described embodiment illustrates the outlines of the purification tool 10 and the preparer 1, and does not precisely reflect, e.g., the structure, shape, and size of each portion and ratios between these portions.

### Examples

Hereinafter, the present invention will be specifically described with reference to examples and the like below, but is not limited to these examples and the like. Fillers and dioxin-containing oils used in the examples and the like below and evaluation are as follows.

### [Filler]

Sulfuric Silica Gel:
Sulfuric silica gel was used, which was prepared in such a manner that concentrated sulfuric acid (manufactured by Wako Pure Chemical Corporation) is uniformly added to active silica gel (manufactured by Kanto Chemical Co., Inc.) and the resultant is thereafter dried. The amount of concentrated sulfuric acid added to the active silica gel was set such that the amount of sulfuric acid with respect to the active silica gel is 44% in terms of a weight.

Silver Nitrate Silica Gel:
An aqueous solution obtained in such a manner that silver nitrate (manufactured by Wako Pure Chemical Corporation) is dissolved in distilled water was added to active silica gel (manufactured by Kanto Chemical Co., Inc.), and was uniformly mixed. Silver nitrate silica gel was used, which was obtained in such a manner that the resultant mixture is heated to 70°C under a reduced pressure by means of a rotary evaporator and is dried. A silver nitrate solution set such that the amount of silver nitrate with respect to the weight of active silica gel is 10% was used herein, and the amount of silver nitrate in the silver nitrate silica gel was set to 10% with respect to an active silica gel weight.

Potassium Permanganate-Fixed Aluminum Oxide:
One was used, which was obtained in such a manner that aluminum oxide (a product name "Aluminium Oxide 90 active basic - (activity stage I) for column chromatography" (a particle size of 0.063 to 0.200 mm) manufactured by Merck) is baked at 450°C for four hours such that moisture and an adhering organic substance are removed and the baked aluminum oxide is injected into and uniformly mixed with a potassium permanganate solution prepared using distilled water and is thereafter dried using an evaporator such that the water content thereof is 5% in terms of a weight. Four types of potassium permanganate solutions were used herein, for which the amount of potassium permanganate with respect to the weight of baked aluminum oxide injected into the solution has been set to 2%, 3%, 4%, and 5%. Four types of potassium permanganate-fixed aluminum oxide were used herein, for which the amount of fixed potassium permanganate has been set to 2%, 3%, 4%, and 5% with respect to the aluminum oxide weight.

Potassium Permanganate-Fixed Silica Gel:
One was used, which was obtained in such a manner that active silica gel (manufactured by Kanto Chemical Co., Inc.) is baked at 450°C for four hours such that moisture and an adhering organic substance are removed and the baked active silica gel is injected into and uniformly mixed with a potassium permanganate solution prepared using distilled water and is thereafter dried using an evaporator such that the water content thereof is 10% in terms of a weight. A potassium permanganate solution was used herein, for which the amount of potassium permanganate with respect to the weight of baked active silica gel injected into the solution has been set to 5%. The amount of fixed potassium permanganate has been set to 5% with respect to the active silica gel weight.

Activated Carbon-Containing Silica Gel:
Activated carbon-containing silica gel was used, which was obtained in such a manner that activated carbon (a product name "Kuraray Coal PK-DN" of Kuraray Co., Ltd.) is added to active silica gel (manufactured by Kanto Chemical Co., Inc.) and is uniformly mixed. The content of the activated carbon was set to 0.13% by weight.

Graphite-Containing Silica Gel:
Graphite-containing silica gel was used, which was obtained in such a manner that graphite (a product name "ENVI-Carb" of Sigma-Aldrich) is added to active silica gel (manufactured by Kanto Chemical Co., Inc.) and is uniformly mixed. The content of the graphite was set to 12.5% by weight.

Aluminum Oxide:
A product name "Aluminium Oxide 90 active basic - (activity stage I) for column chromatography" (a particle size of 0.063 to 0.200 mm) of Merck was used.

Active Silica Gel:
A commercially-available product (manufactured by Kanto Chemical Co., Inc.) was used.

### [Dioxin-Containing Oils]

Standard Dioxin Solution:
A standard dioxin substance (a product name "DF-LCS-A" of Wellington Laboratories Inc.), which has a known concentration, of 1 mL and a standard PCBs substance (a product name "PCB-LCS-H" of Wellington Laboratories Inc.), which has a known concentration, of 1 mL were added to and dissolved in n-hexane of 100 mL, and the resultant was taken as a standard dioxin solution. The standard dioxin substance includes PCDDs, PCDFs, and DL-PCBs labelled by ¹³C₁₂. The standard PCBs substance includes six types of non-DL-PCBs (PCBs with chlorine numbers of 3 to 7) which are labelled by ¹³C₁₂ and of which IUPAC numbers are #28, #52/69, #101, #138, #153, and #180. These PCBs are targeted for food regulations in the EU.

Sunflower Oil:
   Commercially-Available Product
Plant Oil Mixture:
   Commercially-Available Product
Olive Oil:
   Commercially-Available Product
Rapeseed Oil:
   Commercially-Available Product
Grape Oil:
   Commercially-Available Product

Pork Oil:
Ground pork (a commercially-available product) was leveled to a thickness of about 2 cm and placed on a tray of a freeze dryer, and such a pork sample was frozen to - 40°C in the freeze dryer. After about three to six hours, the inner pressure of a chamber of the freeze dryer was decreased to around 20 Pa, and drying of the pork sample was started. Drying was terminated when the temperature of the pork sample reached about 20°C to 30°C. After the above-described treatment, the pork sample was put in a cylindrical paper filter for Soxhlet extraction, and Soxhlet extraction was performed for 16 hours by means of an organic solvent mixture of which a ratio (A:B) between toluene (A) and acetone (B) is 7:3. The resultant extract was dehydrated and filtered using anhydrous sodium sulfate. The organic solvent mixture was removed from such a filtrate by means of a rotary evaporator, and thereafter, a residue in the form of oil was used as pork oil.

Chicken Oil:
Using ground chicken (a commercially-available product) instead of the ground pork, a residue, which was obtained through the same steps as those of the steps of preparing the pork oil, in the form of oil was used as chicken oil.

Chicken Egg Oil:
Using a commercially-available beaten chicken egg instead of the ground pork, a residue, which was obtained through the same steps as those of the steps of preparing the pork oil, in the form of oil was used as chicken egg oil.

Beef Tallow Oil:
Using ground beef (a commercially-available product) instead of the ground pork, a residue, which was obtained through the same steps as those of the steps of preparing the pork oil, in the form of oil was used as beef tallow oil.

### [Example 1]

A purification tool 10 in the form illustrated in Fig. 1 was produced. Sulfuric silica gel of 23g was charged into a tubular body such that the height thereof is 105 mm, the tubular body being set such that the outer diameter of a body portion other than a protruding portion 111 is 20 mm, an inner diameter is 17.6 mm, and a length is 120 mm. In this manner, a sulfuric silica gel layer 130 was formed, and a first portion 110 was produced. Moreover, after silver nitrate silica gel of 2.5 g had been charged into a tubular body, which has the same outer diameter, inner diameter, and length as those of the above-described body portion of the first portion 110, such that the height thereof is 22 mm, potassium permanganate-fixed aluminum oxide (note that the amount of fixed potassium permanganate is 5%) of 8.5 g was charged onto and stacked on the silver nitrate silica gel such that the height thereof is 33 mm. In this manner, a treatment layer 140 was formed, and a second portion 120 was produced. Then, the first portion 110 and the second portion 120 were integrated with each other in such a manner that the protruding portion 111 of the produced first portion 110 is fitted in one end side of the second portion 120, and the purification tool 10 was completed. At this point, as illustrated in Fig. 2, the first portion 110 and the second portion 120 were coupled to each other such that the sulfuric silica gel layer 130, a carrier layer 141 (a potassium permanganate-fixed aluminum oxide layer), and a silver nitrate silica gel layer 142 are provided in this order from the first portion 110 to the second portion 120.

### [Example 2]

A first portion 110 and a second portion 120 similar to those produced in Example 1 were produced, except that potassium permanganate-fixed silica gel was used in production of the second portion instead of potassium permanganate-fixed aluminum oxide. Moreover, the first portion 110 and the second portion 120 were coupled to and integrated with each other such that a sulfuric silica gel layer 130, a carrier layer 141 (a potassium permanganate-fixed silica oxide gel layer), and a silver nitrate silica gel layer 142 are provided in this order from the first portion 110 to the second portion 120. In this manner, a purification tool 10 was produced.

### [Example 3]

A first portion 110 and a second portion 120 similar to those produced in Example 1 were produced, except that a layer of charged potassium permanganate-fixed aluminum oxide was first formed in production of the second portion and a layer of charged silver nitrate silica gel was stacked on the layer of charged potassium permanganate-fixed aluminum oxide to form a treatment layer 140. Moreover, the first portion 110 and the second portion 120 were coupled to and integrated with each other, and a purification tool 10 configured such that a sulfuric silica gel layer 130, a silver nitrate silica gel layer 142, and a carrier layer 141 (a potassium permanganate-fixed aluminum oxide layer) are arranged in this order from the first portion 110 to the second portion 120 was produced.

### [Examples 4 to 6]

Using potassium permanganate-fixed aluminum oxide having a different amount of fixed potassium permanganate, a purification tool 10 similar to that produced in Example 1 was produced. The amount of fixed potassium permanganate with respect to an aluminum oxide weight in the potassium permanganate-fixed aluminum oxide used in each example is shown in Table 1.

### [Table 1]

**[Table 1]**

| | Fixed Potassium Permanganate Amount (%) |
|---|---|
| Example 4 | **2** |
| Example 5 | **3** |
| Example 6 | **4** |

### [Examples 7 to 10]

A purification tool 10 similar to that produced in Example 1 was produced, except that an active silica gel layer 131 was, as a first portion 110, arranged below a sulfuric silica gel layer 130 as illustrated in Fig. 5. The first portion 110 used herein was produced in such a manner that active silica gel was charged into a tubular body and sulfuric silica gel was charged onto the active silica gel. The amounts and heights of charged active silica gel and sulfuric silica gel are shown in Table 2.

### [Table 2]

**[Table 2]**

| | Active Silica Gel | | Sulfuric Silica Gel | |
|---|---|---|---|---|
| | Charged Amount (g) | Charged Height (mm) | Charged Amount (g) | Charged Height (mm) |
| Example 7 | 1 | 10 | 18. 5 | 100 |
| Example 8 | 2 | 20 | 17 | 90 |
| Example 9 | 3 | 30 | 15 | 80 |
| Example 10 | 4 | 40 | 13.5 | 70 |

### [Comparative Example 1]

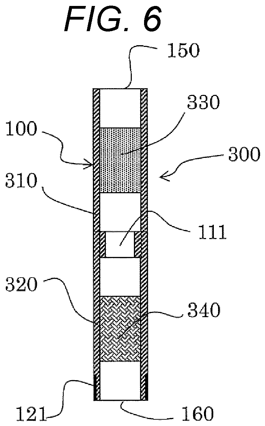

A first comparative purification tool 300 illustrated in Fig. 6 was produced. Fig. 6 is a view of the present comparative example corresponding to Fig. 2. The first comparative purification tool 300 was produced in such a manner that a first portion equivalent 310 in which a nitric acid silica gel layer 330 is formed of silver nitrate silica gel of 11.5 g charged into the first portion 110 of the tubular body 100 used in Example 1 such that the height thereof reaches 110 mm and a second portion equivalent 320 in which a sulfuric silica gel layer 340 is formed of sulfuric silica gel of 13 g charged into the second portion 120 of the tubular body 100 used in Example 1 such that the height thereof reaches 90 mm are produced and the first portion equivalent 310 and the second portion equivalent 320 are integrated with each other as in the purification tool 10 of Example 1.

### [Comparative Example 2]

A first portion 110 and a second portion 120 similar to those produced in Example 1 were produced, except that a treatment layer 140 is made only of silver nitrate silica gel in the second portion. Then, the first portion 110 and the second portion 120 were coupled to and integrated with each other, and a second comparative purification tool configured such that a sulfuric silica gel layer 130 and a silver nitrate silica gel layer 142 are arranged in this order from the first portion 110 to the second portion 120 was produced.

### [Evaluation]

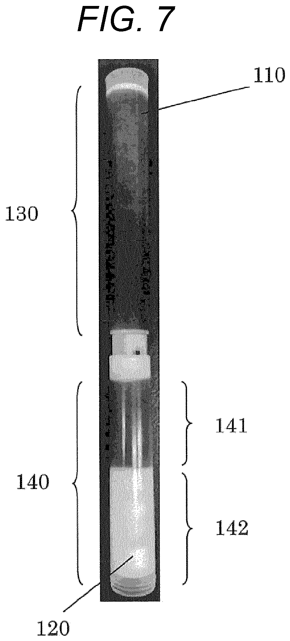

Evaluation 1:
A photograph of the purification tool 10 produced in Example 1 is shown in Fig. 7. In Fig. 7, the purification tool 10 is configured such that the first portion 110 is on the upper side and the second portion 120 is on the lower side. According to Fig. 7, a portion corresponding to the carrier layer 141 shows, in the treatment layer 140 of the second portion 120, a dark color provided by the potassium permanganate. The same also applies to the purification tool 10 produced in each of Examples 2 to 6 (note that Example 2 and Examples 4 to 6 are similar to Fig. 7, but Example 3 shows the dark color on the lower side of the treatment layer 140 because the carrier layer 141 is on the lower side in the treatment layer 140).

An oil sample was added to the sulfuric silica gel layer 130 through an opening 150 of the first portion 110 of the purification tool 10 produced in Example 1. The oil sample added herein was one diluted to 10 mL by addition of n-hexane to sunflower oil of 6 g. The sulfuric silica gel layer 130 to which the oil sample had been added was heated and held at 80°C for 30 minutes, and thereafter, n-hexane of 130 mL was gradually supplied into the first portion 110 through the opening 150 while being pressurized to 50 kPa. Such n-hexane passed through each layer of the first portion 110 and the second portion 120, and then, was discharged from an opening 160 of the second portion 120.

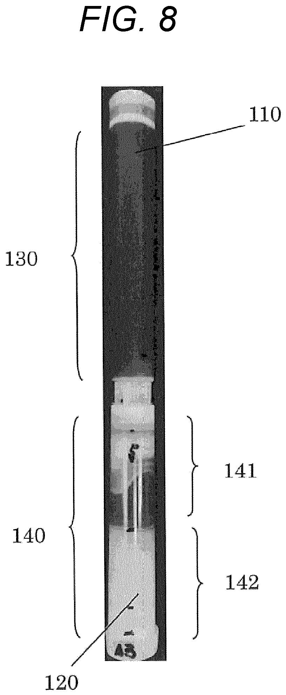

A photograph of the purification tool 10 after passage of the n-hexane (i.e., after purification of the oil sample) is shown in Fig. 8. Fig. 8 shows that the vicinity of the upper portion of the carrier layer 141 (the potassium permanganate-fixed aluminum oxide layer) which had been initially in the dark color due to the potassium permanganate has been changed to a lighter color. This shows that the potassium permanganate of the carrier layer 141 reacted with SOx gas generated in the sulfuric silica gel layer 130 and the SOx gas was consumed.

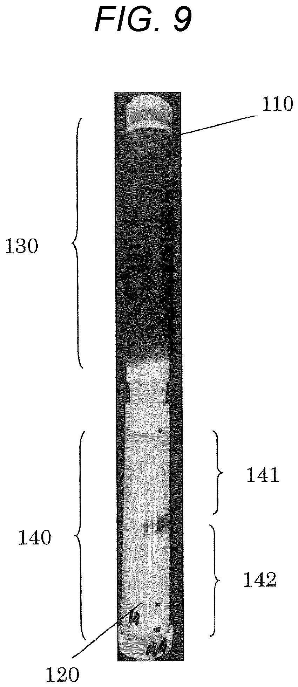

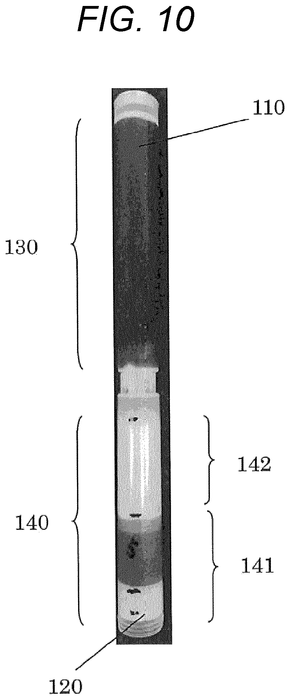

Similar operation was performed for the purification tool 10 produced in each of Examples 2 and 3, and photographs of the state after passage of the n-hexane (i.e., after purification of the oil sample) are each shown in Figs. 9 and 10. Fig. 9 shows that the substantially entirety of the carrier layer 141 has been changed to a lighter color, and therefore, it is evaluated that in the purification tool 10 of Example 2, the potassium permanganate of the carrier layer 141 also reacted with the SOx gas generated in the sulfuric silica gel layer 130 and the SOx gas was consumed. On the other hand, Fig. 10 shows that only the vicinity of the upper portion of the carrier layer 141 has been changed to a slightly-lighter color. This shows that in the purification tool 10 of Example 3, the SOx gas generated in the sulfuric silica gel layer 130 was converted into NOx gas when passing through the silver nitrate silica gel layer 142 of the carrier layer 141 and such NOx gas reacted with the potassium permanganate of the carrier layer 141 and was consumed.

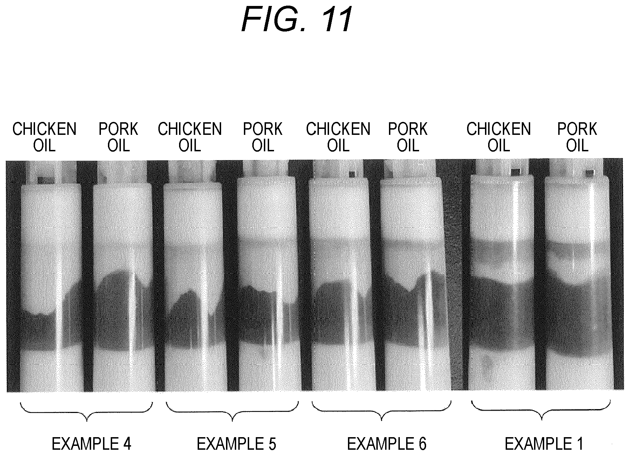

Evaluation 2:
Using the purification tool 10 produced in each of Example 1 and Examples 4 to 6, pork oil of 6 g and chicken oil of 6 g were purified by the same operation as that of Evaluation 1. A photograph of a carrier layer 141 portion of the second portion 120 of the purification tool 10 according to each example after purification is shown in Fig. 11.

According to Fig. 11, Examples 4 to 6 targeted for evaluation herein show that the carrier layer 141 has been changed to a lighter color as in Example 1. Thus, for Examples 4 to 6, it is also evaluated that the potassium permanganate of the carrier layer 141 reacted with the SOx gas generated in the sulfuric silica gel layer 130 and such SOx gas was consumed. Note that in the case of Example 1 where the amount of fixed potassium permanganate is 5%, an area where the carrier layer 141 has been changed to a lighter color is limited, but in the cases of Examples 4 to 6 where the amount of fixed potassium permanganate is less than that of Example 1, the area where the carrier layer 141 has been changed to a lighter color is larger. This shows that a greater amount of potassium permanganate fixed to the aluminum oxide as a carrier leads to more efficient consumption of the SOx gas generated in the sulfuric silica gel layer 130.

Evaluation 3:
Using the purification tool 10 of each of Example 1 and Example 3, a preparer 1 illustrated in Fig. 3 was produced. A trapper 200 used in the preparer 1 was produced as follows. A first layer 240 was formed between a first branched path 215 and a second branched path 216 of a pipe body 210 set to a body portion outer diameter of 8 mm, a body portion inner diameter of 6 mm, and a body portion length of 30 mm. The first layer 240 was formed such that a graphite-containing silica gel layer 242 is formed of graphite-containing silica gel of 0.6 g charged to a height of 25 mm and an activated carbon-containing silica gel layer 241 is formed on the graphite-containing silica gel layer 242 from activated carbon-containing silica gel of 0.25 g charged to a height of 5 mm. Moreover, a second layer 250 was formed in such a manner that aluminum oxide of 0.8 g is charged into a portion between the second branched path 216 and a lower end such that the height thereof reaches 30 mm.

Using the preparer 1, a dioxin analysis sample was prepared from dioxin-containing oils. Test oils used in analysis sample preparation operation were those obtained in such a manner that dioxin-containing oils of 5 g are collected into a test tube and are diluted to 10 mL by addition of n-hexane. In a case where the dioxin-containing oils are those other than a standard dioxin solution, test oils were prepared in such a manner that a standard dioxin substance of 0.02 mL and a standard PCBs substance of 0.02 mL are added to dioxin-containing oils collected into a test tube and n-hexane is further added to the resultant, the standard dioxin substance and the standard PCBs substance being used in preparation of the standard dioxin solution.

In preparation of the analysis sample, the total amount of the test oils was, using a resin disposable syringe, added to the sulfuric silica gel layer 130 through the opening 150 of the first portion 110 of the purification tool 10. The total amount of the added test oils penetrated the sulfuric silica gel layer 130, and thereafter, the inside of the used syringe was rinsed once with n-hexane of 2 to 4 mL and such rinse solution was also added to penetrate the sulfuric silica gel layer 130.

Next, the sulfuric silica gel layer 130 was heated to 80°C, and was held at such a temperature for 30 minutes. Thereafter, the temperature of heating of the sulfuric silica gel layer 130 was changed to 60°C, and n-hexane of 130 mL was supplied to the sulfuric silica gel layer 130 through the opening 150. Then, such n-hexane passed through the purification tool 10 and the trapper 200, and was discharged from an opening 212 of the trapper 200. Meanwhile, a supply pressure necessary for stable passage of the n-hexane was approximately 50 to 70 kPa, but a supply pressure exceeding 500 kPa was necessary at one point. It is assumed that this is because the treatment layer 140 was clogged with a decomposition product in the sulfuric silica gel layer 130. A time necessary from the start of the supply of the n-hexane to completion of discharging of the n-hexane was about 52 minutes. After discharging of the n-hexane from the opening 212 had been completed, compressed air was supplied into the purification tool 10 through the opening 150 to dry each layer in the purification tool 10 and the trapper 200.

After the end of drying, the second layer 250 of the trapper 200 was heated to 90°C, and the opening 150 and the first branched path 215 were air-tightly closed. In this state, toluene of 2.5 mL was supplied into the trapper 200 through the opening 212. Then, after having passed through the second layer 250, the toluene was recovered through the second branched path 216, and a first analysis sample was obtained. Next, the first layer 240 of the trapper 200 was heated to 90°C, and the opening 150 and the second branched path 216 were air-tightly closed. In this state, toluene of 2.5 mL was supplied into the trapper 200 through the opening 212. Then, after having passed through the second layer 250 and the first layer 240 in this order, the toluene was recovered through the first branched path 215, and a second analysis sample was obtained.

Each of the first analysis sample and the second analysis sample was separately quantitatively analyzed by a HRGC/HRMS method, and the rate of recovery of dioxins and non-DL-PCBs was calculated. Results are shown in Table 3. Note that in the HRGC/HRMS method, GC-MS manufactured by Agilent Technologies, Inc. was used and DB-5ms (note that a length is 60 m) manufactured by the same company was used as a capillary column. The same also applies to the following other types of evaluation employing a HRGC/HRMS method.

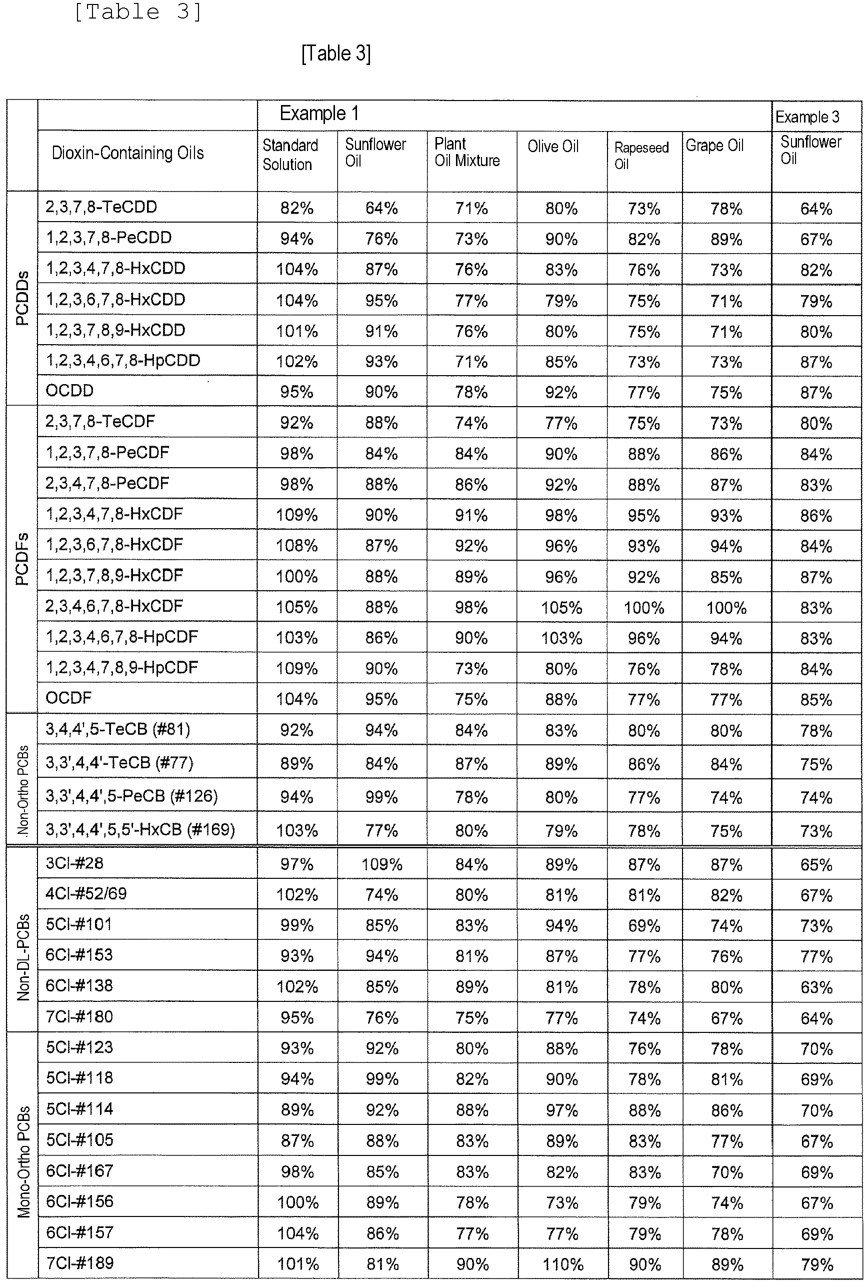

According to Table 3, the first analysis sample and the second analysis sample obtained using the purification tools 10 of Example 1 and Example 3 show that the rate of recovery of each dioxin falls within a range of 60% to 120%, and therefore, can be utilized as an evaluation sample according to the food regulation standards in the EU.

Evaluation 4:
Using the first comparative purification tool 300 of Comparative Example 1, a preparer equivalent to the preparer 1 illustrated in Fig. 3, i.e., one configured such that only the purification tool 10 of the preparer 1 is replaced with the first comparative purification tool 300, was produced. Using this preparer, a dioxin analysis sample was prepared from dioxin-containing oils. Test oils used in analysis sample preparation operation were those obtained in such a manner that sunflower oil is collected into a test tube and is diluted to 10 mL by addition of n-hexane after a standard dioxin substance of 0.02 mL and a standard PCBs substance of 0.02 mL have been added to the sunflower oil, the standard dioxin substance and the standard PCBs substance being used in preparation of a standard dioxin solution. Two types of test oils of which usages of the sunflower oil are 3.5 g and 4 g were prepared. These test oils are those of which usages of the dioxin-containing oils (the sunflower oil) are reduced as compared to those used in Evaluation 2.

In preparation of the analysis sample, the total amount of the test oils was, using a resin disposable syringe, added to the silver nitrate silica gel layer 330 through an opening 150 of the first portion equivalent 310 of the first comparative purification tool 300. The total amount of the added test oils penetrated the silver nitrate silica gel layer 330, and thereafter, the inside of the used syringe was rinsed once with n-hexane of 2 to 4 mL and such rinse solution was also added to penetrate the silver nitrate silica gel layer 330.

Next, the silver nitrate silica gel layer 330 was heated to 60°C, and was held at such a temperature for 10 minutes. Thereafter, n-hexane of 90 mL was gradually supplied to the silver nitrate silica gel layer 330 through the opening 150. Then, such n-hexane passed through the first comparative purification tool 300 and a trapper 200, and was discharged from an opening 212 of the trapper 200. Meanwhile, an n-hexane supply pressure was set to equal to or higher than 50 kPa. After discharging of the n-hexane from the opening 212 had been completed, compressed air was supplied into the first comparative purification tool 300 through the opening 150 to dry each layer in the first comparative purification tool 300 and the trapper 200.

After the end of drying, a first analysis sample and a second analysis sample were obtained by execution of operation similar to that in the case of Evaluation 3. Each of the first analysis sample and the second analysis sample was separately quantitatively analyzed by a HRGC/HRMS method, and the rate of recovery of dioxins and non-DL-PCBs was calculated. Results are shown in Table 4.

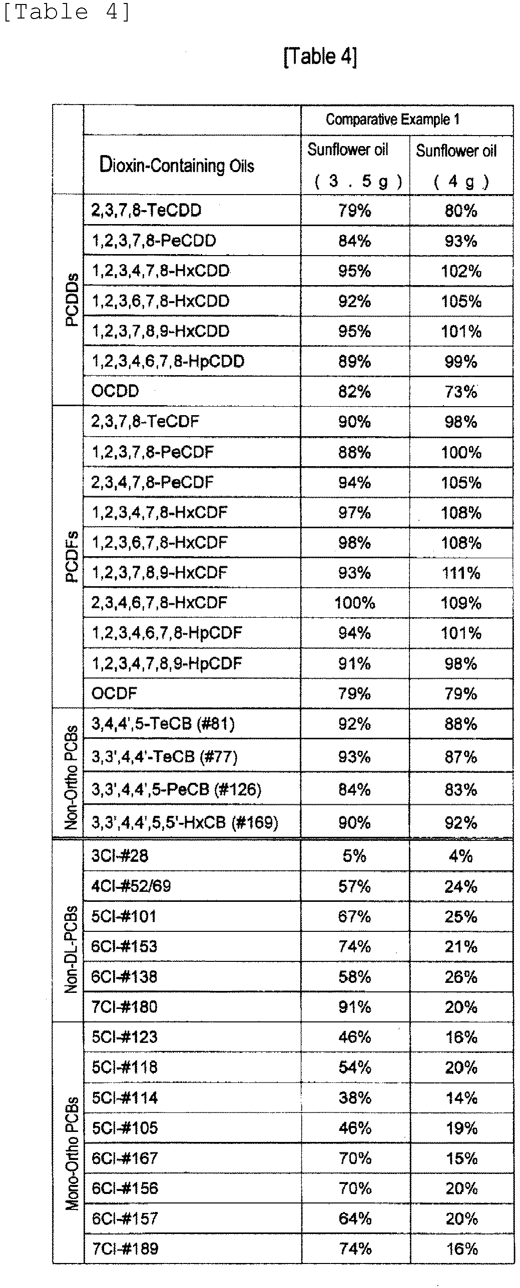

According to Table 4, in a case where the usage of the sunflower oil is 3.5 g, the rate of recovery of part of PCBs contained in the first analysis sample is lower than 60%. In a case where such a usage is 4 g, the rate of recovery of all of the PCBs contained in the first analysis sample greatly falls below 60%. Thus, in a case where test oils with great usages of the dioxin-containing oils are applied to the first comparative purification tool 300, purification is insufficient, and it is difficult to prepare an analysis sample which can be utilized as an evaluation sample according to the food regulation standards in the EU.

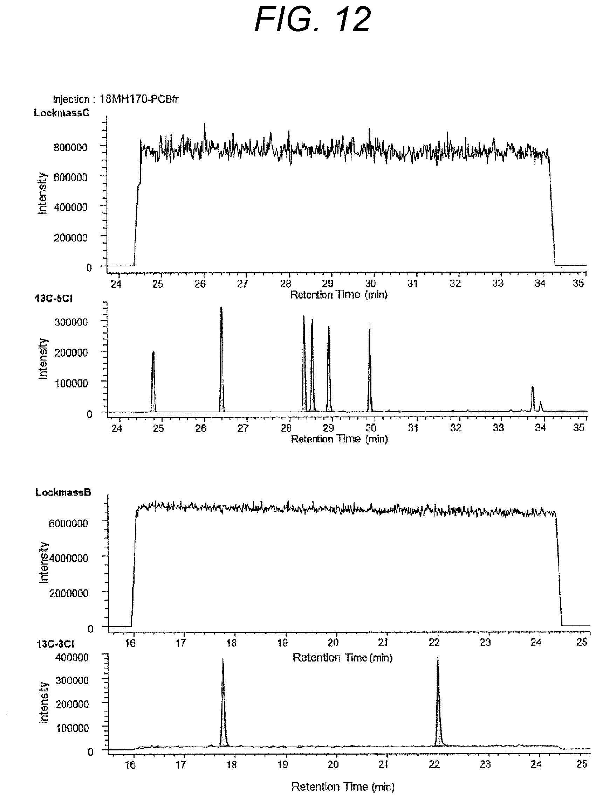

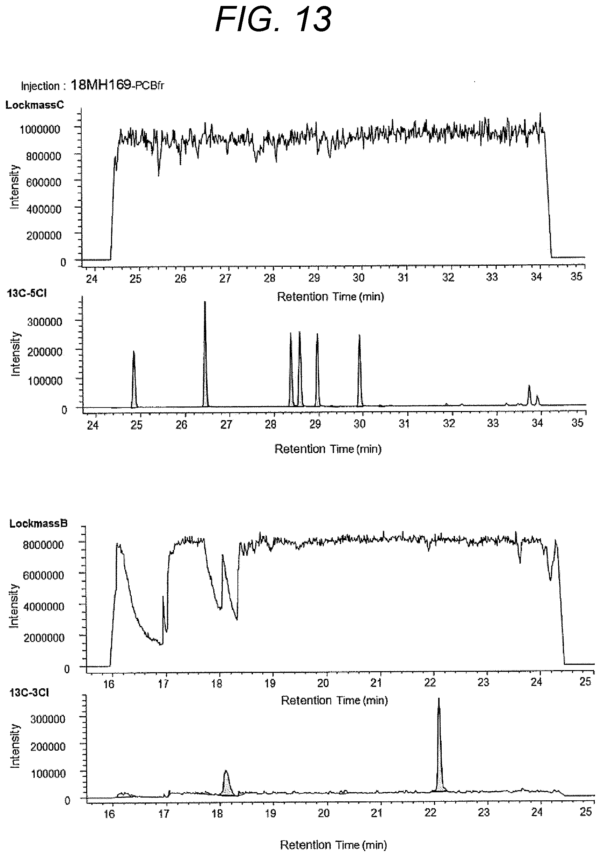

Evaluation 5:
For the first analysis samples prepared from the sunflower oil by means of the preparers 1 employing the purification tools 10 of Examples 1, 3 in Evaluation 3, lock mass (perfluorokerosene detection noise measured at the same time as analysis and used for mass calibration) results when a retention time obtained upon measurement in the HRGC/HRMS method is within a range (a range in which the chromatogram of PCBs with a chlorine number of 5 is shown) of approximately 24 to 35 minutes and when the retention time is within a range (a range in which the chromatogram of PCBs with a chlorine number of 3 is shown) of approximately 16 to 24 minutes are shown in Fig. 12 regarding the first analysis sample of Example 1, and are shown in Fig. 13 regarding the first analysis sample of Example 3.

According to Fig. 12, the lock mass for the first analysis sample of Example 1 is stable, and sharp detection peaks of the PCBs with a chlorine number of 5 and the PCBs with a chlorine number of 3 are shown with a high intensity. On the other hand, according to Fig. 13, the lock mass for the first analysis sample of Example 3 is relatively unstable, and the detection peaks of the PCBs with a chlorine number of 5 and the PCBs with a chlorine number of 3 are shown with a relatively-low intensity. Since the impurity substance contained in the analysis sample interferes with perfluorokerosene ionization and makes the lock mass unstable, the purification tool 10 of Example 1 can highly purify the dioxin-containing oils as compared to the purification tool 10 of Example 3.

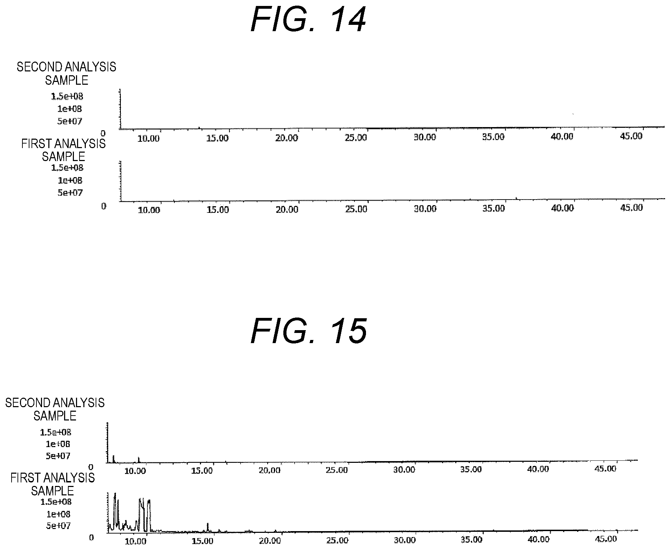

Evaluation 6:
For the first analysis sample and the second analysis sample prepared from the sunflower oil by means of the preparer 1 employing each of the purification tools 10 of Examples 1, 3 in Evaluation 3, GC-MS measurement was measured in a scan mode for detecting a compound of which m/z falls within a mass range of 50 to 500. Results for the analysis sample obtained using the purification tool 10 of Example 1 are shown in Fig. 14, and results for the analysis sample obtained using the purification tool of Example 3 are shown in Fig. 15.

In Fig. 14, no compound with the above-described mass range was detected for any of the first analysis sample and the second analysis sample. However, in Fig. 15, the compound with the above-described mass range was detected for both analysis samples. As in the results of Evaluation 5, these results show that the purification tool 10 of Example 1 can highly purify the dioxin-containing oils as compared to the purification tool 10 of Example 3.

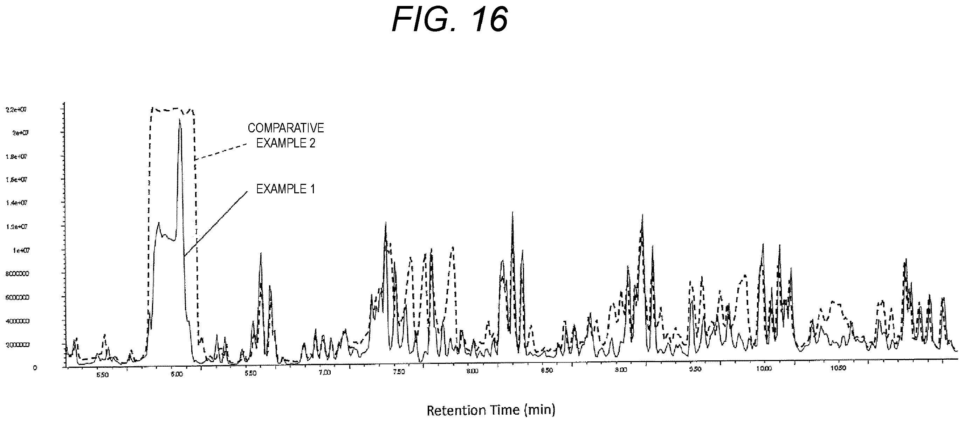

Evaluation 7:
In Evaluation 3, sunflower oil of 5 g was purified using the purification tool 10 of Example 1. Purification operation in this evaluation was similar to that of the case of Evaluation 3, except that no trapper 200 was coupled to the purification tool 10. An obtained purification solution was concentrated using a rotary evaporator, and GC-MS measurement was performed for such concentrated liquid by a scan mode for detecting a compound of which m/z falls within a mass range of 50 to 500. On the other hand, sunflower oil of 5 g was purified by similar operation by means of the second comparative purification tool of Comparative Example 2 instead of the purification tool 10 of Example 1. An obtained purification solution was concentrated using the rotary evaporator, and GC-MS measurement was performed for such concentrated liquid by the scan mode for detecting the compound of which m/z falls within a mass range of 50 to 500. Results are shown in Fig. 16.

According to Fig. 16, the measurement results for the purification solution prepared using the purification tool 10 of Example 1 show a smaller peak area as compared to the measurement results for the purification solution prepared using the second comparative purification tool of Comparative Example 2. This shows that the amount of impurity substance in the purification solution prepared using the purification tool 10 of Example 1 is less than the amount of impurity substance in the purification solution prepared using the second comparative purification tool of Comparative Example 2, i.e., the purification tool 10 of Example 1 shows a higher dioxin-containing oil purification effect than that of the second comparative purification tool of Comparative Example 2.

Evaluation 8:
Using each of the purification tools 10 of Examples 4 to 6, a preparer 1 illustrated in Fig. 3 was produced. Then, operation similar to that in the case of Evaluation 3 was executed using such a preparer 1, and in this manner, a first analysis sample and a second analysis sample were obtained. Note that in this evaluation, test oils were obtained in such a manner that chicken water of 6 g is collected into a test tube and is diluted to 10 mL by addition of n-hexane after a standard dioxin substance of 0.02 mL and a standard PCBs substance of 0.02 mL have been added to the chicken water, the standard dioxin substance and the standard PCBs substance being used in preparation of a standard dioxin solution.

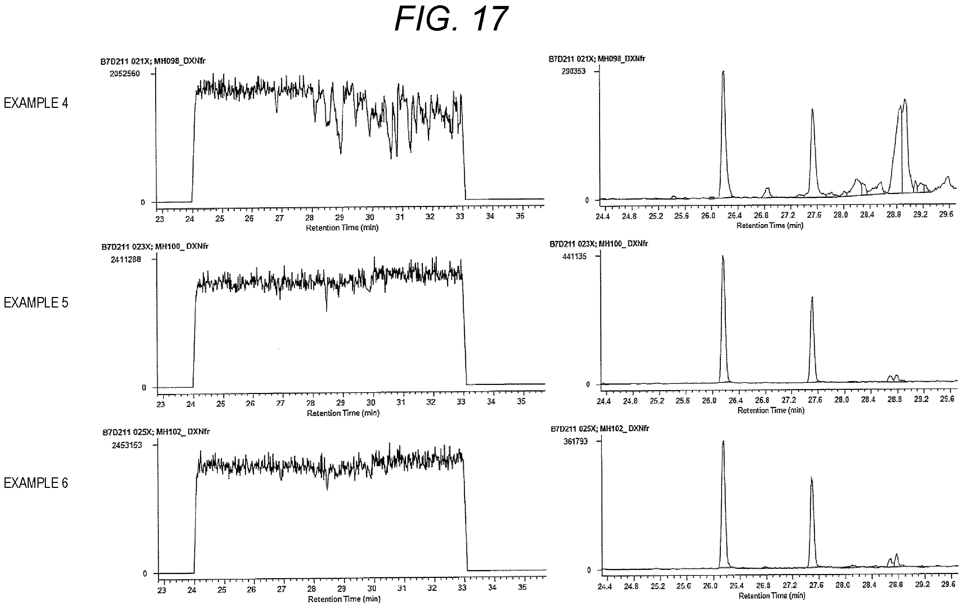

Lock mass results in a retention time range of approximately 24 to 33 minutes when the obtained second analysis sample is analyzed by a HRGC/HRMS method are shown in Fig. 17. According to Fig. 17, the lock mass is stable in the order of Examples 4, 5, and 6, and the peak of the chromatogram is clearly shown. This shows that the dioxin-containing oil purification effect increases as the amount of potassium permanganate fixed to the aluminum oxide as the carrier in the carrier layer 141 of the purification tool 10 increases.

Evaluation 9:
Using each of the purification tools 10 of Examples 7 to 10, a preparer 1 illustrated in Fig. 3 was produced. Then, operation similar to that in the case of Evaluation 3 was executed using such a preparer 1, and in this manner, a first analysis sample and a second analysis sample were obtained. Note that in this evaluation, two types of test oils were prepared in such a manner that chicken egg oil of 6 g and beef tallow oil of 6 g are each collected into separate test tubes and are diluted to 10 mL by addition of n-hexane after a standard dioxin substance of 0.02 mL and a standard PCBs substance of 0.02 mL have been added to these oils, the standard dioxin substance and the standard PCBs substance being used in preparation of a standard dioxin solution. Note that the chicken egg oil is oils containing a greater amount of unsaturated fatty acid, and on the other hand, the beef tallow oil is oils containing a greater amount of saturated fatty acid. In supply of the n-hexane to the preparer 1, a supply pressure necessary for stable passage of the n-hexane was stable at approximately 50 to 70 kPa from beginning to end even in the case of using the purification tool 10 of any of Examples 7 to 10. It is assumed that this is because a decomposition product in the sulfuric silica gel layer 130 is trapped by the active silica gel layer 131 and clogging of the treatment layer 140 with the decomposition product is reduced. A time necessary from the start of the supply of the n-hexane to completion of discharging of the n-hexane was about 52 minutes which is the same as that in the case of Evaluation 3.

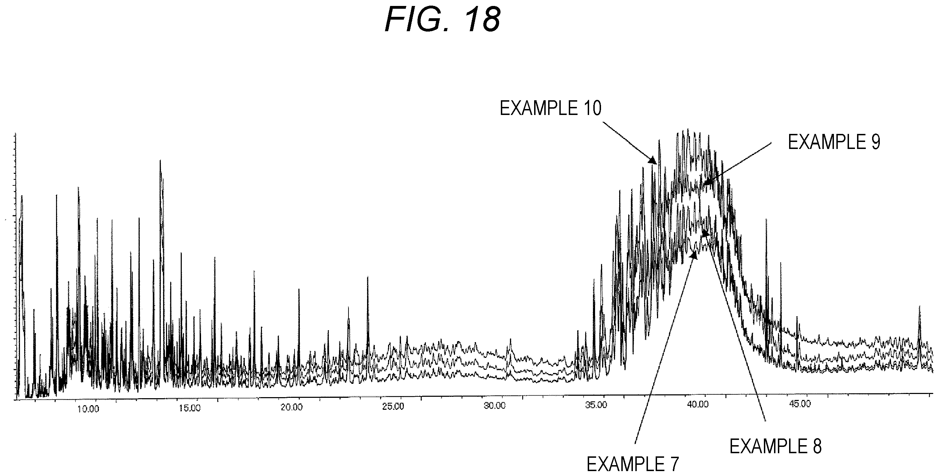

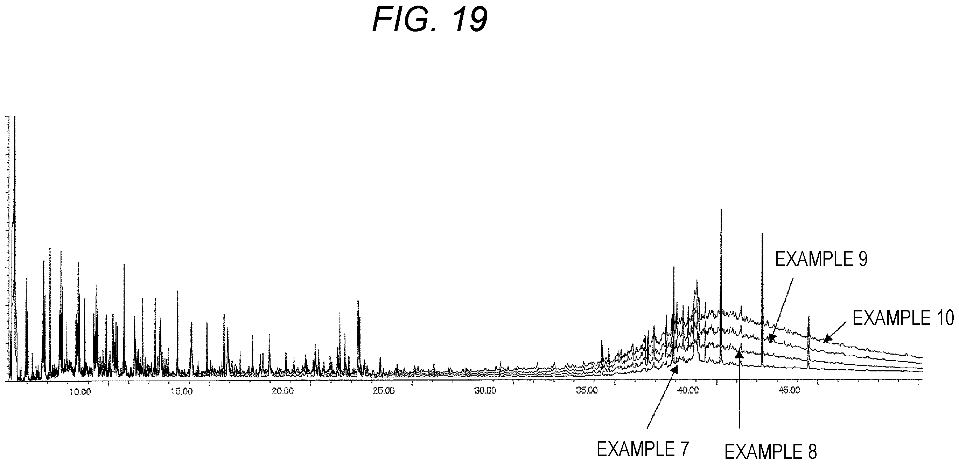

Chromatographs when the first analysis sample and the second analysis sample obtained from each of the test oils are analyzed by a HRGC/HRMS method are shown in Fig. 18 (the case of the test oils prepared from the chicken egg oil) and Fig. 19 (the case of the test oils prepared from the beef tallow oil). In Figs. 18 and 19, a base line increases in the order of Example 7, Example 8, Example 9, and Example 10. This shows that a test oil purification effect is higher in a case where the usage of the sulfuric silica gel is greater and the usage of the active silica gel is smaller and the supply pressure of the n-hexane (the aliphatic hydrocarbon solvent) can be stabilized with a small usage of the active silica gel.

### LIST OF REFERENCE NUMERALS

- 10: Purification Tool
- 100: Tubular Body
- 110: First Portion
- 120: Second Portion
- 130: Sulfuric Silica Gel Layer
- 131: Active Silica Gel Layer
- 140: Treatment Layer
- 141: Carrier Layer
- 142: Silver Nitrate Silica Gel Layer

## Claims

1. A method for purifying oils for analyzing an organic halogenated substance contained in the oils, comprising:
a step of adding the oils to a sulfuric silica gel layer;
a step of supplying an aliphatic hydrocarbon solvent to the sulfuric silica gel layer to which the oils have been added; and
a step of causing the aliphatic hydrocarbon solvent having passed through the sulfuric silica gel layer to pass through a treatment layer including a carrier layer with fixed permanganate and a silver nitrate silica gel layer.

2. The method for purifying the oils according to claim 1, wherein
the carrier layer is an aluminum oxide layer with fixed permanganate.

3. The method for purifying the oils according to claim 1 or 2, wherein
the aliphatic hydrocarbon solvent having passed through the sulfuric silica gel layer passes through the carrier layer and the silver nitrate silica gel layer in this order in the treatment layer.

4. The method for purifying the oils according to any one of claims 1 to 3, further comprising:
a step of causing the aliphatic hydrocarbon solvent having passed through the sulfuric silica gel layer to pass through an active silica gel layer before passing through the treatment layer.

5. A tool for purifying oils for analyzing an organic halogenated substance contained in the oils, comprising:
a tubular body opening at both ends;
a sulfuric silica gel layer charged into the tubular body; and
a treatment layer including a carrier layer with fixed permanganate and a silver nitrate silica gel layer, the carrier layer and the silver nitrate silica gel layer being charged into the tubular body separately from the sulfuric silica gel layer.

6. The tool for purifying the oils according to claim 5, wherein
the carrier layer is an aluminum oxide layer with fixed permanganate.

7. The tool for purifying the oils according to claim 5 or 6, wherein
the treatment layer includes the carrier layer positioned between the sulfuric silica gel layer and the silver nitrate silica gel layer.

8. The tool for purifying the oils according to any one of claims 5 to 7, wherein
the tubular body is divided into a first portion filled with the sulfuric silica gel layer and a second portion filled with the treatment layer, and is formed in such a manner that the first portion and the second portion are joined to each other.

9. The tool for purifying the oils according to any one of claims 5 to 8, further comprising:
an active silica gel layer charged into a portion between the sulfuric silica gel layer and the treatment layer in the tubular body.
